(19) **Europäisches Patentamt / European Patent Office / Office européen des brevets**

(11) **EP 3 846 107 B1**

(12) **EUROPEAN PATENT SPECIFICATION**

(45) Date of publication and mention of the grant of the patent:
**25.10.2023 Bulletin 2023/43**

(21) Application number: **19789787.9**

(22) Date of filing: **30.08.2019**

(51) International Patent Classification (IPC):
**G06Q 30/018** *(2023.01)*   **B41M 5/24** *(2006.01)*
**B41M 5/26** *(2006.01)*   **G06V 20/80** *(2022.01)*

(52) Cooperative Patent Classification (CPC):
**G06Q 30/0185; G06V 20/80;** B41M 5/24;
B41M 5/26; G06V 20/95

(86) International application number:
**PCT/PT2019/050031**

(87) International publication number:
**WO 2020/046155 (05.03.2020 Gazette 2020/10)**

(54) **COMPUTER-IMPLEMENTED METHOD FOR PREPARING AN ORIGINAL MARKED OBJECT WITH A HIGHER LEVEL OF SECURITY AGAINST ADULTERATION AND COUNTERFEITING THROUGH A DETERMINISTIC DESIGN, COMPUTING DEVICE, COMPUTER PROGRAMS, COMPUTER-READABLE DATA CARRIER AND DEVICE ADAPTED FOR THE PREPARATION OF THE OBJECT**

VERFAHREN ZUR ERHÖHUNG DES SICHERHEITSNIVEAUS EINES OBJEKTS MITTELS EINES DETERMINISTISCHEN ENTWURFS, OBJEKT MIT ERHÖHTEM SICHERHEITSNIVEAU UND VERFAHREN, RECHENVORRICHTUNG, COMPUTERPROGRAMME, LESEMITTEL UND VORRICHTUNG ZUR HERSTELLUNG DES OBJEKTS

PROCÉDÉ POUR L'INTENSIFICATION DU NIVEAU DE SÉCURITÉ D'UN OBJET AU MOYEN D'UN MODÈLE DÉTERMINISTE, OBJET À NIVEAU DE SÉCURITÉ INTENSIFIÉ ET PROCÉDÉ, DISPOSITIF INFORMATIQUE, PROGRAMMES D'ORDINATEUR, MOYENS DE LECTURE ET APPAREIL ADAPTÉS POUR LA PRÉPARATION DE L'OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2018 PT 2018111116**

(43) Date of publication of application:
**07.07.2021 Bulletin 2021/27**

(73) Proprietors:
• **Imprensa Nacional-Casa Da Moeda, SA**
**1000-042 Lisboa (PT)**
• **Universidade de Coimbra**
**3004-531 Coimbra (PT)**

(72) Inventors:
• **MENDONÇA DA SILVA GONÇALVES, Nuno Miguel**
**3000-046 Coimbra (PT)**
• **DIAS BARATA, Ricardo Jorge**
**3045-057 Coimbra (PT)**

• **MORAES VALLE CRUZ, Leandro**
**W37DU**
**London (GB)**
• **SANTOS PATRÃO, Bruno André**
**4425-436 Pedrouços, Maia (PT)**

(74) Representative: **Monteiro Alves, Inês**
**Alameda Dos Oceanos, Nº 41K-21**
**Parque das Nações**
**1990-207 Lisboa (PT)**

(56) References cited:
**WO-A1-97/25177    WO-A2-2012/126008**
**US-A1- 2017 355 215**

• **SALOOMEH SHARIATI ET AL: "Random Profiles of Laser Marks", PROCEEDINGS OF THE 31ST WIC SYMPOSIUM ON INFORMATION THEORY IN THE BENELUX, 1 May 2010 (2010-05-01), XP055654234,**

**Description**

**TECHNICAL FIELD OF THE INVENTION**

This invention relates to a computer-implemented method intended to enhance the level of security against adulteration and counterfeiting of an object, allowing the validation of its authenticity, and tracking / tracing the object.

This invention also comprises an original marked object with a higher level of security against adulteration and counterfeiting and the respective preparation method thereof.

This invention also relates to the computing devices for reading information in an image comprising means adapted for performing the stages of the method, computer programs with instructions for performing the methods constituting the invention, a means of reading through a computing device with the respective installed computer programs and devices adapted for the preparation of the object.

**STATE OF THE ART**

In the field of ensuring the authenticity of an object, which is typically valuable, authenticity guarantee marks (hallmarks) may be incorporated therein, whereby such marks may undergo visual analysis, and may include information on the purity level or the provenance of the object.

The development of objects made from precious metals with high security levels, in response to the spread of counterfeiting goods with high added value, is an ongoing goal for companies producing such objects, or for institutions that develop authentication marks, as forgers and counterfeiters, acting in groups or independently, can access high-quality equipment and instruments that are increasingly more sophisticated, allowing them to counterfeit products with high added value.

Objects and products with high added value may include coins, medals and jewels made from precious metals, such as gold, silver, platinum and palladium.

The trade in counterfeit goods made from precious metals is a significant factor with adverse effects on the sales and profits of the companies involved. According to data from the Europol Public Information Report (2018), counterfeiting may account for 2.5% of global trade, involving some USD 461 billion a year, equivalent to 5% of annual imports by the European Union.

Specifically with regard to the jewelry market, counterfeiting activities encourage parallel illegal markets for these products, or even introduce counterfeit goods made from materials with lower quality levels than advertised.

Methods are known for including marks intended to guarantee the authenticity of precious metals, through minting techniques. However, a mark that is intended to be unique is recognizable, and security in terms of preventing copies of this mark is dependent on access to the minting dies, the associated equipment or the ability to reproduce them.

Methods are also known that incorporate codes with n-dimensions in objects, such as barcodes or QR codes, or use solutions with electronic components, such as RFID, that may require significantly complex construction.

Methods are known for enhancing security on objects through the inclusion of unique and non-clonable characteristics that are formed through random processes, such as the process developed by Arppe-Tabbara et al.: Versatile and Validated Optical Authentication System Based on Physical Unclonable Functions, ACS Applied Materials & Interfaces 2019 11 (6), 6475-6482. This reference constituting the state of the art presents a process that uses luminescent tags sprayed onto a printed QR code, where the luminescent tags use microparticles and carriers usually related to printing and coating technologies. Although the object security enhancement method disclosed in this reference is robust, the method in question has some inconvenient aspects related to the need to apply a coating to the object, which may result in limited applications for small objects, or objects where the application of coatings would adversely affect their aesthetic characteristics, such as jewels and commemorative coins with high added value.

Furthermore, methods are known for enhancing the security of objects through the inclusion of unique and non-clonable characteristics that are formed through random processes, such as the process disclosed in WO9603714 A1 (Jeszenszky, Gyula and Dombi, János) on February 8, 1996, Figure 1. This reference at the state of the art presents a solution that uses three-dimensional markings on the surface of the object, consisting of rough areas arrayed through a stochastic arrangement, where the rough areas are laid down by electro-erosion techniques. Such electro-erosion techniques may be too aggressive for metal artefacts with high added value, such as jewelry parts, for example. Moreover, these techniques are not appropriate for small items. The laser is a far more suitable method in such cases, with a collimated light beam that is focused on the point to be created. Electro-erosion techniques offer other disadvantages that are related to the use of potentially corrosive oils, with cleaning required for jewelry parts or artefacts made from precious metals, which are finished or quasi-finished parts and may be subject to wear and erosion through friction or chemical destruction. Moreover, electro-erosion techniques are significantly slower.

The patent appplication US2017355215A1 (KONG Ching Tom; MIAO Zhuonan; WANG Yingnan; published on December 14, 2017) discloses a method of validating the authenticity of an object, wherein the method includes forming an identification marking within an article formed from a optically transparent material by way of a subsurface laser engraving (SSLE) method. The SSLE technique is limited to engrave an array of dots within the transparent material, having a very limited intersection among said dots, which not contribute to higher levels of security.

The patent appplication WO9725177A1 (Oded et al.; published on July 17, 1997) discloses a method for marking a surface of a diamond by means of a pulse laser, wherein intentional or "pseudorandom" irregularities (seemingly random, but carrying information in a data pattern) may be imposed on the marking, in order to encode additional information on top of an a marking pattern. However, the security level of said "pseudorandom" irregularities is lower than a very chaotic random unique mark.

Thus, in view of the impossibility of conventional hallmarks providing the necessary level of protection for objects and products with high added value, due to the methods and devices for counterfeiting that are already in place, there is much interest in developing methods for introducing authenticity control marks on objects and products with high added value that are unique and cannot be reproduced.

There is thus a need to develop an object with an enhanced security level against adulteration and counterfeiting that could be applied with versatility to a variety of products and objects, especially for the industry producing high-value items made from precious metals. There is also a need to develop a method for checking the authenticity of high-value items made from precious metals with a verification method endowed with a high level of reliability. Furthermore, it is desired that the method could be performed by conventional computing devices, such as smartphones.

## BRIEF DESCRIPTION OF THE DRAWINGS

In order to foster an understanding of the principles according to the embodiments of this invention, reference will be made to the embodiments illustrated in the Figures and the language used to describe them. Nevertheless, it must be understood that there is no intention curtailing the scope of this invention to the content of the Figures. Any subsequent modifications or alterations to the inventive characteristics illustrated here, and any additional applications to the illustrated embodiments and principles of the invention that would occur normally to an expert versed in the art with this Specification to hand are deemed to fall within the scope of the claimed invention.

Figure 1 - illustrates an embodiment of an original deterministic design and an original marked deterministic design on an original object;

Figure 2 - illustrates the marking of two marked original deterministic designs, based on a single original deterministic design;

Figure 3 - illustrates the comparison between different images of the same marked deterministic design;

Figure 4 - illustrates the comparison between different images of another marked deterministic design;

Figure 5 - illustrates the comparison between the images of different marked deterministic designs;

Figure 6 - illustrates an embodiment of an original deterministic design with suitable density, compared to a low-density deterministic design and an excessively dense deterministic design;

Figure 7 - illustrates an embodiment of an original deterministic design and an ancillary mark; and

Figure 8 - illustrates an embodiment of a method for verifying the authenticity of a marked object to be validated and method for preparing an original object.

Key for Reference Numbers:

(1) an original deterministic design;

(2) an original marked deterministic design;

(3) a marked deterministic design to be validated;

(4) an image of the original deterministic design;

(5) an image of the original marked deterministic design;

(6) an image of the marked deterministic design to be validated;

(7) a descriptor for the original deterministic design;

(8) a descriptor for the original marked deterministic design;

(9) a descriptor for the marked deterministic design to be validated;

(10) an original marked object;

(11) a marked object to be validated;

(12) an optical reader;

(13) a computing device;

(14) a server;

(15) a database;

(16) an ancillary mark;

(17) an identification for the database record;

(18) coordinates of the original deterministic design;

(101) preparation of an original deterministic design;

(102) laser marking of the original deterministic design;

(103) at least one picture taken of the original marked deterministic design;

(104) association of at least one item of information with at least one image of the original marked deterministic design;

(105) storage of information and images for an original marked deterministic design in a database;

(106) at least one picture taken of a marked deterministic design to be validated on a marked object to be validated;

(107) calculation of at least one descriptor for the marked deterministic design to be validated;

(108) validation of the authenticity of at least one marked deterministic design to be validated, embodied in a marked object to be validated; and

(109) decision on the authenticity of at least one marked deterministic design to be validated, embodied in a marked object to be validated.

## DETAILED DESCRIPTION OF THE INVENTION

In a first aspect, this invention relates to a method for preparing an original marked object (10) with a higher level of security against adulteration and counterfeiting comprised of the following stages:

a) Preparation of an original deterministic design (1) by a computing device (13);

b) Laser marking of the original deterministic design (1), prepared in Step a), on the surface of an object, embodied as an original marked deterministic design (2) on an original marked object (10), wherein the laser marking of the original deterministic design (1), obtaining the original marked deterministic design (2), is performed on a portion of the original marked object (10), wherein the said portion is comprised of one or more materials selected from plastics, metal alloys and metals, for example, gold, silver, platinum and palladium, wherein said laser marking of the original deterministic design (1) is executed by a device for controlling a laser beam;

c) At least one picture taken of the original marked deterministic design (5) with an optical reader (12) in a computing device (13), obtaining at least one image of the original marked deterministic design (5);

d) Association of at least one item of information with at least one image of the original marked deterministic design (5), obtaining at least one descriptor for the original marked deterministic design (8); wherein said method comprises the further following stage;

e) Storage of at least one item of information associated with the image of the original marked deterministic design (5) in a database (15), wherein the stored information comprises at least one descriptor for the original marked deterministic design (8), at least one identification for the database record and one or more coordinates of the original deterministic design (1).

In the preferred embodiments, this invention relates to a computer-implemented method for preparing an original marked object (10) with a higher level of security against adulteration and counterfeiting comprised of the following stages:

a) Preparation of an original deterministic design (1) by a computing device (13);

b) Laser marking of the original deterministic design (1), prepared in Step a), on the surface of an object, embodied as an original marked deterministic design (2) on an original marked object (10), wherein the laser marking of the original deterministic design (1), obtaining the original marked deterministic design (2), is performed on a portion of the original marked object (10), wherein the said portion is comprised of one or more materials selected from plastics, metal alloys and metals, for example, gold, silver, platinum and palladium, wherein said laser marking of the original deterministic design (1) is executed by a device for controlling a laser beam;

c) At least one picture taken of the original marked deterministic design (5) with an optical reader (12) in a computing device (13), obtaining at least one image of the original marked deterministic design (5);

d) Association of at least one item of information with at least one image of the original marked deterministic design (5), obtaining at least one descriptor for the original marked deterministic design (8);

e) Storage of at least one item of information associated with the image of the original marked deterministic design (5) in a database (15), wherein the stored information comprises at least one descriptor for the original marked deterministic design (8), at least one identification for the database record and one or more coordinates of the original deterministic design (1); wherein said computer-implemented method comprises the following stages intended to enhance the level of security against adulteration and counterfeiting of an object, allowing the validation of its authenticity, and tracking / tracing the object:

f) Picture taken of at least one marked deterministic design image to be validated (6) in a marked object to be validated (11) with an optical reader (12) in a computing device (13);

g) Calculation of at least one descriptor for the marked deterministic design to be validated (9), performed by the computing device (13), based on at least one marked deterministic design image to be validated (3);

h) Validation of the authenticity of at least one marked deterministic design to be validated (3), embodied in a marked object to be validated (11), through comparing information calculated from at least one image of the marked deterministic design to be validated (6) with information corresponding to at least one image of the original marked deterministic design (5) stored in the database (15);

i) Decision on the authenticity of at least one marked deterministic design to be validated (3) embodied in a marked object to be validated (11).

In a second aspect, this invention relates to a computing device (13) comprising means adapted to perform the stages of the computer-implemented method for the validation of a marked object to be validated, wherein the computing device (13) comprises an optical reader (12) to execute the stages c) and f) and a device for controlling a laser beam to execute the step b) of said computer-implemented method.

In a third aspect, this invention relates to a computing device (13) comprising means adapted to perform the stages of the computer-implemented method for the preparation of an original marked object, wherein the computing device (13) comprises an optical reader (12) to execute the stage c) and a device for controlling a laser beam to execute the step b) of said computer-implemented method.

In a fourth aspect, this invention relates to a computer program comprised of instructions, which when the program is executed by the computing device (13), according to the second aspect of the invention, cause the computing device (13) to perform the stages of the computer-implemented method for the validation of a marked object to be validated.

In a fifth aspect, this invention relates to a computer program comprised of instructions, which when the program is executed by the computing device (13), according to the third aspect of the invention, cause the computing device (13) to perform the stages of the computer-implemented method for the preparation of an original marked object.

In an sixth aspect and a seventh aspect, this invention relates to computer-readable data carriers having stored thereon these computer programs according to this invention.

In a eighth aspect, this invention relates to a device for preparing an original marked object (10) with a higher level of security against adulteration and counterfeiting comprising means, adapted to control the device emitting the laser beam and with the said device being configured to perform the method for the preparation of an original marked object.

The computer-implemented method intended to enhance the level of security against adulteration and counterfeiting of an object, allowing the validation of its authenticity and the tracking / tracing of the object, constituting the purpose of this invention, solve problems at the state of the art related to the need to create unique authentic marks and that are not clonable, where the security marks and the marking method may be applied not only to objects made from precious metals, but also to a wide variety of products. With regard to the validation of the authenticity, the scope of this invention includes the identification and tracking / tracing of an object.

Surprisingly, the authentication marks and the method for verifying the authenticity of an object are not only unique, bearing in mind that they result from a chaotic random process, but also cannot be cloned, as it is virtually impossible to reproduce them. These characteristics are critical for enhancing the security level of the markings.

Another advantage associated with the authentication marks in the context of this invention refers to the fact that the said marks are endowed with long-lasting mechanical resistance, taking into consideration the extended useful life of an object made from precious metals, maintaining the unique characteristics.

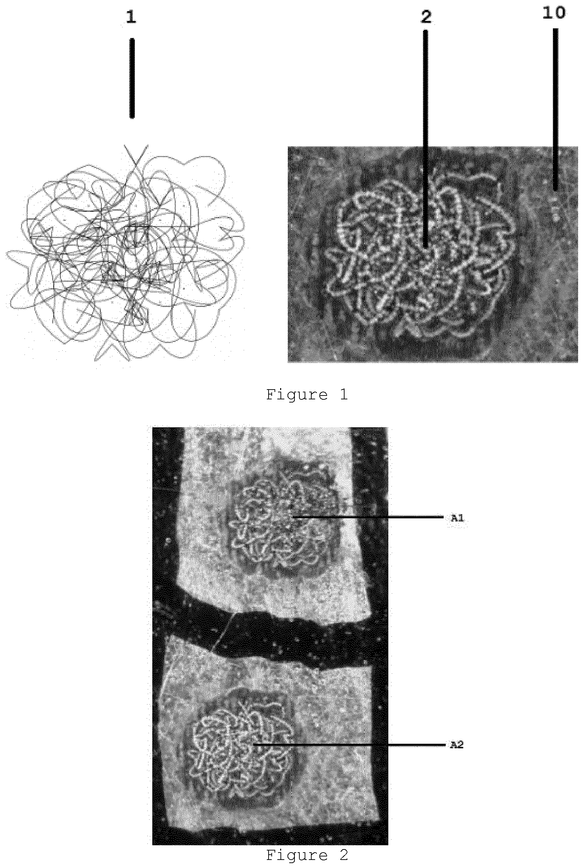

As shown in Figure 1, in one of the embodiments of this invention, the original deterministic design (1) comprises one or more time-oriented continuous lines and is described through a mathematical function. The time orientation means that the mathematical function is a time function, meaning that they are mathematical functions whose graphs may be constructed through using a one-dimensional time parameter function.

The original deterministic design (1) comprises a plurality of lines, with each one of the lines preferably intercepting at least one of the other lines, wherein at least one of the lines is curved. It is a long these pre-defined standard lines that the laser marking is placed, meaning that the laser beam runs along the route defined by the original deterministic design (1), producing the unique marking.

In illustration, an example of a mathematical function applicable to at least one section of the original deterministic design (1) may be represented by the following complex plane function:

$$f(t) = \sum_j a_j e^{n_j i t} \quad \text{(Function 1)}$$

Where in Function 1, $i = \sqrt{-1}$ , $a_j$ is a complex number and $n_j$ is a full number. It is usual for the number of terms in the function to vary, for example between 2 to 4 terms, although functions with a larger number of terms may be constructed. The $a_j$ coefficient is a randomly-selected complex number, for example: with a real part in the $\boldsymbol{Re(a_j)} \in$ **[-1;1]** interval and an imaginary part in the $\boldsymbol{Im(a_j)} \in$ **[-i;i]** interval. The $\boldsymbol{n_j}$ exponent is a full number selecting, for example, from the $\boldsymbol{n_j} \in$ **[-30; 30]** interval.

The level of complexity and randomness of the mathematical function may increase if the $\boldsymbol{a_j}$ and $\boldsymbol{n_j}$ values are also time functions, namely: $\boldsymbol{a_j = a_j(t)}$ and $\boldsymbol{n_j = n_j(t)}$. For example, cyclic or non-cyclic functions may be used in the intervals defined above, such as sinusoid, exponential and negative exponential functions, or others.

Alternatively, another mathematical function applicable to at least one segment of the original deterministic design (1) may be a function generated through Bezier equations from an arbitrarily-raised set of random points or following a pre-set order, with the arbitrariness of the set of points related to the density of the final intended curve.

The Bezier curve may be described through an arbitrary set of (n+1) control points $P_0$, $P_1$, $P_2$... $P_n$, with the corresponding Bézier curve, also known as a Bernstein-Bézier curve, represented by:

$$C(t) = \sum_{i=0}^{n} P_i B_{i,n}(t) \quad \text{(Function 2)}$$

Where in Function 2, $\boldsymbol{B_{i,n}(t)}$ is a Bernstein polynomial and $\boldsymbol{t} \in [0,1]$. Bernstein polynomials are defined through:

$$B_{i,n}(t) = \binom{n}{i} t^i (1-t)^{n-1} \quad \text{(Function 3)}$$

Where in Function 3, $\binom{n}{k}$ is a binomial coefficient.

The preparation of an original deterministic design (1) begins with establishing the said design through a mathematical function. In the preferred embodiments, the laser marking on a metal surface, based on an original deterministic design (1), causes the metal to melt along the laser path, whereby the resulting responses from the melted metal portions along the outline of the original marked deterministic design (2) or unforeseeable, determined by an assortment of uncontrollable and non-observable variables.

When a laser beam touches the metal surface with enough energy to melt the metal, bringing it to melting point at the location, known as the melt, this induces an uncontrollable and non-deterministic energy flow process that can cause non-negligible local movements on the metal surface. Moreover, the metal surface inherently presents impurities and flaws in the metal structure that cannot be known in advance, without causing the destruction of the initial state of the material. Thus, an original marked deterministic design (2) on an original marked object (10), as shown in Figure 1, is endowed with unique characteristics, due to the chaotic and non-replicable laser marking process.

The laser path may be defined through taking assorted aspects into account, whereby it is possible that the laser beam may usually run over the same point on the metal surface several times, directing its energy to the contact points in its plane of focus. Preferably, the laser beam plane of focus may be positioned slightly below the 'metal surface of the object, raising the melting capacity of the metal and enhancing the unique and non-replicable technical characteristics of the marked deterministic design.

Furthermore, knowledge of all the technical variables of the laser marking process for a specific original deterministic design does not allow the replication of the same marking. To ensure this, the technical variables of the process include the torque, the metal support material specifications, the laser system specifications, the original deterministic design characteristics and the number of times that the laser beam runs over the deterministic design. In fact, the number of technical process variables exceeds the number of controllable variables, as the scale of the controllable variables is insufficient for the full characterization of the all the physical, chemical and thermo-dynamic variables involved in the process. Consequently, these factors also help ensure that the mark resulting from the laser marking process is unique and non-replicable.

In order to confirm the characteristics listed above, several experiments were conducted that reproduced laser markings on metal surfaces with the same technical specifications, laser-erosion the same original deterministic design. This group of experiments included taking repeated pictures of a specific original deterministic design, with these repeated pictures taken under different conditions.

As shown in Figure 2, based on the same original deterministic design (1), a first original marked deterministic design (A1) was laser-etched on a first metal surface, after which a second original marked deterministic design (A2) was then laser-etched on a second metal surface.

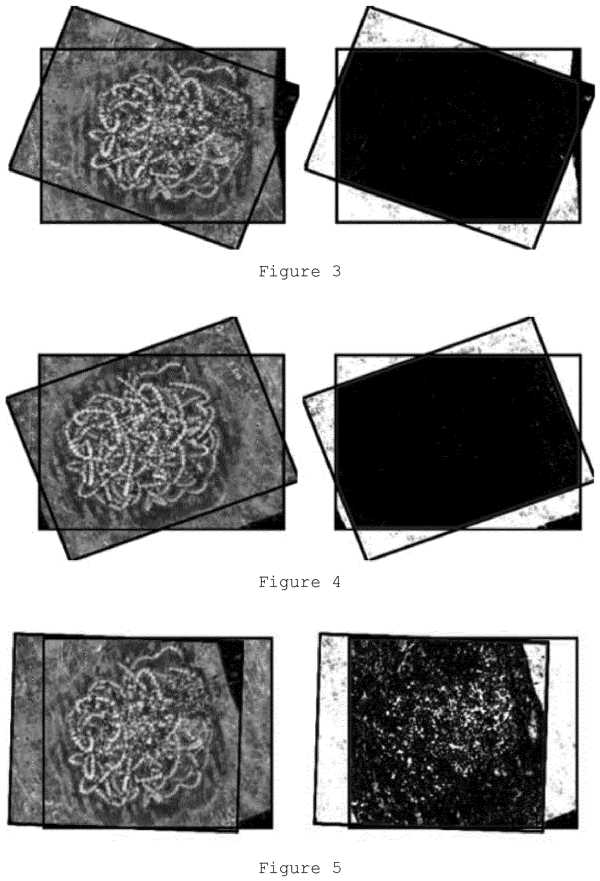

As an illustration, in order to prove the sturdiness of the claimed method, as shown on the left in Figure 3, pictures were taken of two original marked deterministic designs (A1) and subsequently overlapped and aligned. As shown on the right in Figure 3, the difference was quantified between the pixels in these two images, where the white pixels represent the differences between the two pictures. Similarly, as shown on the left in Figure 4, pictures were taken of two original marked deterministic designs (A2) which were then overlapped and aligned. As shown on the right in Figure 4, the difference was quantified between the pixels in these two images, where the white pixels represent the differences between the two pictures. As may be seen, the difference between two images of the same marking is very minor, with the percentage differences between the pixels usually below 5% after the pictures have been properly aligned.

On the other hand, as shown in Figure 5, when pictures of different markings are overlapped, such as when the two original marked deterministic design images (A1) are overlapped with the two original marked deterministic design images (A2), relatively high percentage differences in their pixels are noted that are usually around 50%, once the pictures have been properly aligned.

In this context, it is possible to reach an initial conclusion whereby different pictures of the same original marked deterministic design may be easily matched, as the ratio of identical pixels is very high, confirming the stability of laser markings for the validation and decision on authenticity stages. Furthermore, it is possible to reach a second conclusion related to the fact that different laser markings based on the same original deterministic design may be easily distinguished, as the pixel ratio is far lower than the situation leading to the first conclusion, confirming the robustness of the security level enhancement method against the adulteration and counterfeiting of an object, and in order to allow the validation of the authenticity of the object.

The exact laser marking of the original deterministic design involve several variables in the course of its configuration, for example: the laser beam focus distance; its run speed; the number of repeat runs; and the laser power. The laser beam focus distance comprises the distance between the laser beam and the portion of the surface to be marked, in order to obtain a marking focused on the said portion. The run speed consists of the speed at which a laser beam moves from one point to another. The value intervals for the laser beam focus distance, run speed and laser power are comprised of intervals known at the state of the art, as would be understood by an expert versed in the art. Specifically with regard to the laser power values, they depend on the intended depths of the marking process and also the light path. The number of runs usually ranges between 30 to 100, although values outside this interval are also encompassed by the scope of this invention. The laser power and the number of laser beam runs may be adapted for specific parts of the surface, allowing accurate marking with a mean marking depth that allows abrasion with no alteration to the marking, such as a depth of about 100 micrometers.

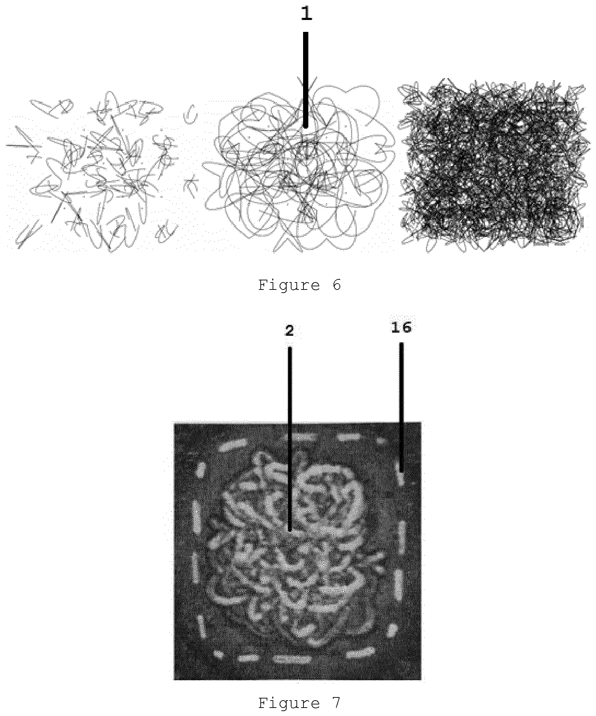

As shown in the central example of Figure 6, the original deterministic design (1) must be intricate enough to prevent retrieval through a reverse engineering method. However, as shown in the example on the left in Figure 6, the deterministic design should not have a low path density that allows its replication. On the other hand, as shown in the example on the right in Figure 6, the deterministic design should not be excessively intricate, as this leads to few salient points in the image allowing adequate information storage, for example.

In another embodiment of this invention, as shown in Figure 7, an ancillary mark (16) is etched on the original marked object (10) through another laser marking stage, with the ancillary mark (16) comprising at least one frame of the original marked deterministic design (2) or at least one marking adjacent to the original marked deterministic design (2). The ancillary mark (16) may be used in the authenticity validation stage of at least one marked deterministic design to be validated, embodied in a marked object to be validated, wherein the said ancillary mark (16) presents information providing directions to the database record (15) and ensuring rapid identification of the specific record of the image of the original marked deterministic design (5) to be used in the validation. Preferably, the ancillary mark (16) comprises one or more codes, selected from the group comprised of binary codes, such is long and short dashes, for example, one-dimensional matrix digital markers and two-dimensional matrix digital markers.

In an embodiment of this invention, the ancillary mark (16) may be comprised of at least one n-sized word, for example: a binary word where the n-sized word may be used as an indexing key for the record with the image of the original marked deterministic design in a database.

The indexing key obtained through the ancillary mark that allows efficient searching of the database, with no need for large computing capacities. The information in the ancillary mark is attained and searched more easily than information related directly to the original marked deterministic design image. Consequently, the authenticity validation stage may be conducted more efficiently. In an embodiment of this invention, the computer-implemented method intended to enhance the level of security against adulteration and counterfeiting of an object, allowing the validation of its authenticity, and tracking / tracing the object may comprise a first comparison between information on the ancillary mark (16) of the original marked object (10) and the ancillary mark information on the marked object to be validated (11), before comparing the image of the original marked deterministic design (5) with the picture of the marked deterministic design to be validated (6). The said first comparison between the ancillary markings may be taken into consideration during the decision stage on the authenticity of at least one marked deterministic design to be validated, embodied in a marked object to be validated.

The laser marking of the original deterministic design (1) and the etching of the ancillary mark (16) may be performed by laser marking methods known at the state of the. There is no need for the ancillary mark (16) to have unique or non-replicable characteristics. Within the set of laser marking methods known to an expert versed in this technique at the state of the art, the method disclosed in US6238847 (B1) (Ayres et al.) may be mentioned, published on May 29, 2001, and the method disclosed in US2008223834 (A1) (Michael John Griffiths and Yancy Edward Fox), published on September 18, 2008.

The two-dimensional matrix digital markers may be selected from the consisting of a UniQode code, and enhanced reality AR code, and Aztec code, a 16K code, a CRONTO code, a Dotcode code, a Data Matrix, a JAB-Code, a MaxiCode, a PDF417, a PEQRC and a QR Code.

In even more preferred embodiments of this invention, the digital marker in the ancillary mark (16) is a UniQode. The UniQode is based on a digital marker created through the appropriate organization of cells that are comprised of a specific pixel arrangement format, typically in a 3x3 format. Some cell patterns are related to graphic symbols used for coding, with the association between a model and a symbol being called a dictionary. In a cell, the pixels are used simultaneously to attribute coding and appearance characteristics. The generation of a UniQode is based on a quantum system, meaning a regular greyscale division into ten classes. For a specific image, each set of cells is typically arranged in a 3x3 pixel format, be encoded in a pattern where the quanta are linked to the colors of the respective pixel in the baseline image. Preferably, the Q3, Q4, Q5 and Q6 are used to associate the graphic symbols adequately to model through dictionaries. In general, each greyscale pixel is transformed into **a k x k** pixel set in a black and white pattern.

The UniQode digital markers may be checked out in "Graphic Code: A New Machine-Readable Approach" (Cruz L., Patrão B. and Gonçalves, N.), presented at the IEEE International Conference on Artificial Intelligence and Virtual Reality (AIVR), December 10 - 12, 2018. The UniQode digital markers may also be checked out in "Halftone Pattern: A New Steganographic Approach" (Cruz L., Patrão B. and Gonçalves, N.), presented at Eurographics 2018, EG 2018 - Short Papers.

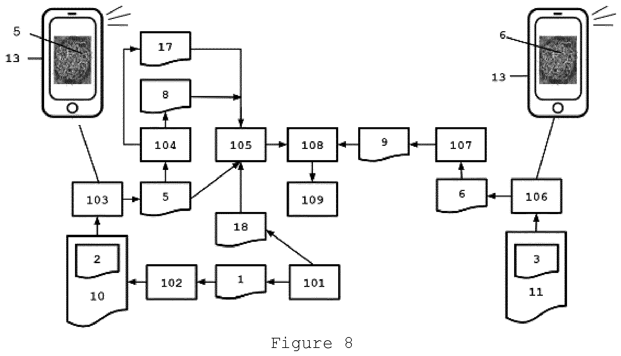

Presented below in detail is a preferred embodiment of the computer-implemented method intended to enhance the level of security against adulteration and counterfeiting of an object and in order to allow the validation of the authenticity of the object of this invention and for the preparation of the said object, as shown in Figure 8.

Initially, a preparation stage (101) is performed for an original deterministic design (1), based on a mathematical function. Next, a laser marking stage (102) of the original deterministic design (1) is performed on a metal surface, obtaining an original marked object (10) comprising an original marked deterministic design (2). In the next stage, at least one image (103) is taken of the original marked deterministic design (5). Then an association stage (104) is performed for at least one item of information and at least one image of the original marked deterministic design (5), obtaining one or more descriptors for the original marked deterministic design (8).

Then a storage stage (105) is performed of at least one item of information associated with the image of the original marked deterministic design (5) in a database (15), where stored associated information comprises at least one descriptor for the original marked deterministic design (8), at least one identification for the record (17) in the database, and one or more coordinates of the original deterministic design (18). As shown in Figure 8, optionally at least one image of the original marked deterministic design (5) also may be stored in the database.

The descriptors for the original marked deterministic design (8) comprise one or more items of information that require an authentication stage in order to be accessed, or must pass through at least one security level.

In one of the embodiments of this invention, during the storage stage (105) of at least one item of information associated with the image of the original marked deterministic design (5) in a database (15), the information on the coordinates of the original deterministic design (1) may be established on the basis of one or more segments of the original deterministic design (1) and the coordinates of each segment comprise one or more of the coordinates selected from the group consisting of parametric time coordinates, two-dimensional coordinates, or binary images. In the preferred embodiments of this invention, the information is established on the basis of parametric time coordinates for each segment of the original deterministic design (1).

In the preferred embodiments of this invention, additional information is stored in the database record (15) on the set of original marked deterministic design images (5), where the additional information comprises one or more items in the consisting of at least one image of the original marked deterministic design (5); information on the marking date, time and place; information on the traceability/trackability of the original marked object (10), including information on transactions and operations involving the said object; information on the manufacturer of the original marked object (10); and information on the categorization of the original marked object (10). The categorization of the object involves, for example: defining whether the object is a jewel or a specific type of jewel, a coin or a medal.

Returning to the embodiment illustrated in Figure 8, in order to validate the authenticity of a marked object to be validated (11). comprising a marked deterministic design to be validated (3), a picture is taken at a photographing stage (106) of at least one marked deterministic design image to be validated (6). Next, a calculation stage (107) is performed for at least one descriptor for the marked deterministic design to be validated (9). The authenticity validation stage (108) is then performed for at least one marked deterministic design to be validated (3), embodied in a marked object to be validated (11). In the authenticity validation stage (108) one or more descriptors for the original marked deterministic design (8) are compared with one or more descriptors for the marked deterministic design to be validated (9), with a pre-set acceptance limit, with such acceptance limit to be taken into consideration during the stage where a decision is taken on the authenticity (109) of at least one marked deterministic design to be validated (3) embodied in a marked object to be validated (11)..

The authenticity validation stage of at least one marked deterministic design to be validated, embodied in a marked object to be validated may be performed, for example, through comparing and aligning at least one image of the original marked deterministic design (5), stored in a database (15) and at least one image of the marked deterministic design to be validated (6) taken through a computing device (13).

The comparison and alignment stage of at least one image of the original marked deterministic design (5) and at least one image of the marked deterministic design to be validated (6) may be performed by any method known at the state of the art, and usual for an expert versed in the art.

The authenticity validation stage of at least one marked deterministic design to be validated (3), embodied in a marked object to be validated (11), through comparing information calculated from at least one image of the marked deterministic design to be validated (6) with information corresponding to at least one image of the original marked deterministic design (5), stored in the database (15), may comprise the comparison of one or more of the geometric characteristics and/or one or more of the texture characteristics and/or one or more of the photometric characteristics and/or one or more of the radiometric characteristics and/or one or more of the three-dimensional depth characteristics and/or one or more of the random particle dispersal density characteristics and/or one or more of the chromatic characteristics in the picture of the marked deterministic design to be validated (6) with the respective characteristics in the image of the original marked deterministic design (5), wherein the said characteristics of the picture of the marked deterministic design to be validated (6) and the image of the original marked deterministic design (5) are defined respectively through one or more descriptors for the marked deterministic design to be validated (9) and through one or more descriptors for the original marked deterministic design (8) .

The authenticity validation stage may also comprise the use of an analysis through comparing the coordinates of the descriptors for the marked deterministic design to be validated (9) and the coordinates of the descriptors for the original marked deterministic design (8), optionally comprising weighting factors associated with one or more of the respective descriptors.

The authenticity validation stage may also comprise the use of an analysis through one or more distance relations between the descriptors of the marked deterministic design to be validated (9) and the descriptors for the original marked deterministic design (8), optionally comprising weighting factors associated with one or more of the said distance relations.

The authenticity validation stage may also comprise the use of an analysis through a neural network configured through the following steps:

i. Selection of a first sample set with a number of coordinates for the descriptors for the original marked deterministic design (8) for neural network training;

ii. Selection of a second sample set with a number of coordinates for the descriptors for the marked deterministic design to be validated (9) for neural network training;

iii. Establishment of normalized differences between the coordinates for the descriptors for the original marked deterministic design (8) and the coordinates for the descriptors for the marked deterministic design to be validated (9);

iv. Establishment of acceptance value intervals for positive verification results between a picture of the original marked deterministic design (5) and the picture of the marked deterministic design to be validated (6).

The authenticity validation stage may also comprise the use of an analysis of the texture characteristics of the image of the original marked deterministic design (5) through one or more of the following techniques: local binary pattern histogram (LBPH); histogram of oriented gradients (HOG); and Gray-Level Co-Occurrence Matrix (GLCM).

The authenticity validation stage may also comprise the use of descriptors of the marked deterministic design to be validated (9), obtained through applying one or more of the following techniques: local binary pattern histogram (LBPH); histogram of oriented gradients (HOG); and Gray-Level Co-Occurrence Matrix (GLCM), where differences are calculated between these techniques, applied to one or more descriptors for the original marked deterministic design (8) and one or more descriptors of the marked deterministic design to be validated (9).

The authenticity validation stage may also comprise the following steps:

i. At least one picture taken of the marked deterministic design to be validated (6) with an optical reader (12) in a computing device (13);

ii. Calculation of the descriptors for the marked deterministic design to be validated (9) performed by the computing device (13);

iii. Search conducted in at least one the database (15) through the descriptors for the original marked deterministic design (8) wherein the database (15) with information on the image of the original marked deterministic design (5) is accessed through the server (14);

iv. Validation of an image of the marked deterministic design to be validated (6) through a comparison in the server (14) of the descriptors for the marked deterministic design to be validated (9) with the descriptors for the original marked deterministic design (8);

v. Decision on the authenticity of a marked object to be validated (11). in the server (14);

vi. Forwarding the decision on authenticity through the server (14) to the computing device (13).

The authenticity validation stage may also comprise the following steps:

i. At least one picture taken of the marked deterministic design to be validated (6) with an optical reader (12) in a computing device (13);

ii. Calculation of the descriptors for the marked deterministic design to be validated (9) performed by the computing device (13);

iii. Validation of an image of the marked deterministic design to be validated (6) in a marked object to be validated (11). through a comparison performed on the computing device (13) of the descriptors for the marked deterministic design to be validated (9) with the descriptors for the original marked deterministic design (8);

iv. Decision on the authenticity of a marked object to be validated (11). in the computing device (13).

The search and identification of the record for the image of the original deterministic design (1) in the database may involve scanning through all record in the database in order to identify the record with the data and image of the marked deterministic design to be validated. The scanning process encompasses the calculation of at least one descriptor for the marked deterministic design to be validated (9), where a search is conducted in the database (15) by the set of descriptors for the marked deterministic design to be validated.

With regard to the search stage in at least one database through descriptors for the original marked deterministic design (8), the search system for information to be sought in the database needs at least one metric for comparison between the information to be sought in the database and the database tuples. One of the most widely used search methods is KNN, where the first search level runs through all the elements in the database, calculating the difference (or distance) between the information to be validated and the tuples. This method then selects the k tuples with the least difference (or distance). At the second selection level, the method arranges the elements using a second comparison metric, measuring, characteristics of the elements to be compared. The result of the search will be the database tuple with the shortest distance (selected from the tuples resulting from the first search level), should this minimum distance be the same or less than the identification threshold. Otherwise, meaning if the shortest distance is greater than the identification threshold, it is considered that the information to be sought in the database does not exist in the database. There are other methodologies of the state of the at that upgrade or refine this KNN method, particularly starting with a search conducted through smaller searches or using some characteristics in order to reduce the size of the search. Furthermore, there are database indexing techniques that can handle searches indexed to direct information on the information to be sought, for example: using part of the information to be sought as a search index and that database, meaning as a way of arranging the tuples.

With regard to the search stage in at least one database through the descriptors for the original marked deterministic design (8), another possible method for speeding up the search for descriptors in a large database is to create a K-D decision tree, training it to distinguish between the descriptors for the pictures of original marked objects and the descriptors for the pictures of the marked objects to be validated. The basic idea is that it is possible to draw up a tiered set of basic decisions that allow the database to be split successively into two parts, not necessarily the same size, using decisions that involve only one descriptor dimension subset. The training phase is essential for training the tree, in order to ensure that there is a finite number of decision levels, from the initial trunk out to the leaves, which constitute the logic end of the tree, thus allowing analyses all the descriptor information. Once the K-D tree has been constructed, making the identification decision, considered as classification in a 1:n descriptor search is considerably faster than if a tree is not used.

The range of the search in the database may be initially restricted through using filters for additional information stored in the database record (15), for example: using filters related to the type of marking; the marking date, time and place; and the object category, for example whether it is a ring or coin; and the metal from which the object is made. Individual comparisons may then be conducted, between the picture of the marked deterministic design to be validated and the pictures of the original deterministic designs retrieved from the database after using restrictive filters.

Alternatively, the range of the search in the database may be limited through the use of an ancillary mark (16) together with the original deterministic design (1) marking, with the ancillary mark (16) presenting information providing directions to the database record (15) and ensuring rapid identification of the specific record of the image of the original marked deterministic design (5) to be used in the authenticity validation stage.

During this stage of deciding on the authenticity of at least one marked deterministic design to be validated, embodied in a marked object to be validated, comparison metrics are used, and decisions are taken according to the state of the art, as understood by an expert versed in the art. Among the metrics known at the stage of the and applicable to the comparison and decision stages, mention may be made of distant metrics between descriptor vendors of the original image and the image to be validated, such as for example Euclidean distance, Sampson distance and the L1 standard.

The simplest decision rule consists of comparing any of the selected distance metrics with a reference value, and should the distance between the descriptors for the original marked deterministic design (8) and the descriptors for the marked deterministic design to be validated (9) exceed the reference threshold, the original marked object will not be deemed the same as the marked object to be validated. Otherwise, if the above-mentioned distance is the same or less than the reference threshold, the marked object to be validated will be deemed to constitute the original marked object.

Other decision rules may be established through artificial intelligence methods, usually but not only machine-learning methods, such as SVM, AdaBoost, Naive Bayes, Decision Trees and Random Forest ranking methods or other methods known at the state of the art. Other machine-learning methods may also be used, for example: non-convolution neural networks (CNNs) or others.

In another embodiment of this invention, the original marked object (10) as the original marked deterministic design (2) placed on a portion of the original marked object (10), wherein the said portion is comprised of one or more materials selected from plastics, wood, metal alloys and metals, for example: gold, silver, platinum and palladium. Preferably, the original marked object (10) may be selected from the group comprised of coins; medals; jewels; precious metal bars; metal sculptures; watches and clocks; pens; cutlery and metal artefacts, for example: electric device parts, electronic device parts, parts for the automotive industry and parts for the aviation industry. Preferably, the methods for verifying authenticity and preparing objects in compliance with this invention may be applicable to any metal objects, regardless of whether such objects are comprised of significant quantities of precious metals.

However, as will be understood by an expert versed in the art, the methods for verifying authenticity and preparing objects in compliance with this invention may be applicable to various types of materials, such as plastics or wood.

The computing device (13) comprises an optical reader (12), with the use of various types of computing devices being possible, such as smartphones fitted with macro-lens cameras, for example. Optionally, computers connected to optical microscopes may be used. Thus, one of the advantages of this invention is that the computer-implemented method for the validation of a marked object to be validated and the computer-implemented method for the preparation of an original marked object may be performed on versatile computing devices that are accessible not only to forensic testing laboratories, but also merchants and consumers.

Furthermore, the merchants themselves may install computers connected to conventional optical microscopes in their stores, offering easy access to this equipment for storekeepers or the consumers themselves.

The database (15) may be installed in the memory of a computing device (13), accessed through a computer program comprised of instructions for ensuring that the computing device (13) performs the stages of the method for validating the authenticity of a marked object to be validated. The computer program comprised of instructions for ensuring that the computing device performs the stages of the method for the preparation of an original marked object (10) with a higher level of security against adulteration and counterfeiting also may also be installed in a computing device (13), such as a smartphone or a local computer connected to an optical microscope. This embodiment means there is no need to use a server and a network of computing devices interconnected by a communication system. In other words, according to this embodiment of this invention, the method for verifying the authenticity of a marked object to be validated and the method for preparing an original marked object according to this invention may be performed offline, essentially using the respective computer programs installed on the computing device (13).

Alternatively, as shown in Figure 8, the database (15) may be included in a computer network and accessed through a server (14).

For the embodiment using a computer network, the computer program comprised of instructions for ensuring that the computing device performs the stages of the computer-implemented method intended to enhance the level of security against adulteration and counterfeiting of an object and in order to allow the validation of the authenticity of the object, the computer program comprised of instructions for ensuring that the computing device performs the stages of the method for the preparation of an original marked object (10) with a higher level of security against adulteration and counterfeiting may be installed on a computing device in a computer network. Alternatively, these computer programs may be installed on a computing device (13) connected to a server through wireless connections, such as a smartphone, for example.

As used in this Specification, the terms "about" and "approximately" referred to a value interval of 10% more or less than the specified number.

As used in this Specification, the term "substantially" means that the actual value is within an interval of about 10% of the desired value, variable or related limit, particularly within about 5% of the desired value, variable or related limit or especially within about 1% of the desired value, variable or related limit.

The matter-object described above is provided as an illustration of this invention and may not be construed in a manner that curtails it. The terminology used to describe specific embodiments of the invention may not be construed in a manner curtails the invention. As used in the Specification, definite and indefinite articles used in the singular shall be construed in a manner that also includes their plurals, unless the context of the Specification explicitly indicates the opposite. When used in this Specification, the terms "comprise" and "include" shall be understood as specifying the presence of the characteristics, elements, components, stages and operations related thereto, one not excluding the possibility of other characteristics, elements, components, stages and operations also being encompassed thereby.

The present invention is defined by the claims. Any subject-matter falling outside the scope of the claims is provided for information purposes only.

## Claims

1. A computer-implemented method for preparing an original marked object (10) with a higher level of security against adulteration and counterfeiting comprising the following stages:

    a) Preparation of an original deterministic design (1) by a computing device (13);
    b) Laser marking of the original deterministic design (1), prepared in Step a), on the surface of an object, embodied as an original marked deterministic design (2) on an original marked object (10), wherein the laser marking of the original deterministic design (1), obtaining the original marked deterministic design (2), is performed on a portion of the original marked object (10), wherein the said portion is comprised of one or more materials selected from plastics, metal alloys and metals, for example, gold, silver, platinum and palladium, wherein said laser marking of the original deterministic design (1) is executed by a device for controlling a laser beam;
    c) At least one picture taken of the original marked deterministic design (5) with an optical reader (12) in a computing device (13), obtaining at least one image of the original marked deterministic design (5);
    d) Association of at least one item of information with at least one image of the original marked deterministic design (5), obtaining at least one descriptor for the original marked deterministic design (8); **characterized in that** it comprises the further following stage:
    e) Storage of at least one item of information associated with the image of the original marked deterministic design (5) in a database (15), wherein the stored information comprises at least one descriptor for the original marked deterministic design (8), at least one identification for the database record and one or more coordinates of the original deterministic design (1).

2. The computer-implemented method for preparing an original marked object (10) with a higher level of security against adulteration and counterfeiting according to the previous Claim, **characterized in that** for the storage stage of at least one item of information associated with the image of the original marked deterministic design (5) in a database (15), the information on the coordinates of the original deterministic design (1) to be established on the basis of one or more segments of the original deterministic design (1) and the coordinates of each segment comprises one or more of the selected coordinates of the group, consisting of time parameter coordinates, two-dimensional coordinates, or binary images.

3. The computer-implemented method for preparing an original marked object (10) with a higher level of security against adulteration and counterfeiting according to the previous Claim, **characterized in that** the coordinates of each segment of the original deterministic design (1) being time parameter coordinates.

4. The computer-implemented method for preparing an original marked object (10) with a higher level of security against adulteration and counterfeiting according to any one of the previous Claims, **characterized in that** additional information is stored in the database record (15) on the image of the original marked deterministic design (5), wherein the additional information comprises one or more items in the consisting of at least one image of the original marked deterministic design (5); information on the marking date, time and place; information on the traceability/trackability of the original marked object (10), including information on transactions and operations involving the said object; information on the manufacturer of the original marked object (10); and information on the categorization of the original marked object (10).

5. The computer-implemented method for preparing an original marked object (10) with a higher level of security against adulteration and counterfeiting according to any one of the previous Claims, **characterized in that** an ancillary laser mark (16)is placed on the original marked object (10), with the ancillary mark (16) comprising at least one frame of the original marked deterministic design (2) or at least one marking adjacent to the original marked deterministic design (2).

6. The computer-implemented method for preparing an original marked object (10) with a higher level of security against adulteration and counterfeiting according to the previous Claim, **characterized in that** the ancillary mark (16) serves as an indexing key for the original marked deterministic design image record (5) in the database (15).

7. The computer-implemented method for preparing an original marked object (10) with a higher level of security against adulteration and counterfeiting according to the previous Claim, **characterized in that** the ancillary mark (16) comprises one or more codes, selected from the group comprised of binary codes, such is long and short dashes, for example, one-dimensional matrix digital markers and two-dimensional matrix digital markers.

8. The computer-implemented method for preparing an original marked object (10) with a higher level of security against adulteration and counterfeiting according to any one of the previous Claims, **characterized in that** the original marked object (10) is selected from the group comprised of coins; medals; jewels; precious metal bars; metal sculptures; watches and clocks; pens; cutlery and metal artefacts, for example: electric device parts, electronic device parts, parts for the automotive industry and parts for the aviation industry.

9. The computer-implemented method for preparing an original marked object (10) with a higher level of security against adulteration and counterfeiting according to any one of the previous Claims comprising the following stages:

   a) Preparation of an original deterministic design (1) by a computing device (13);
   b) Laser marking of the original deterministic design (1), prepared in Step a), on the surface of an object, embodied as an original marked deterministic design (2) on an original marked object (10), wherein the laser marking of the original deterministic design (1), obtaining the original marked deterministic design (2), is performed on a portion of the original marked object (10), wherein the said portion is comprised of one or more materials selected from plastics, metal alloys and metals, for example, gold, silver, platinum and palladium, wherein said laser marking of the original deterministic design (1) is executed by a device for controlling a laser beam;
   c) At least one picture taken of the original marked deterministic design (5) with an optical reader (12) in a computing device (13), obtaining at least one image of the original marked deterministic design (5);
   d) Association of at least one item of information with at least one image of the original marked deterministic design (5), obtaining at least one descriptor for the original marked deterministic design (8); **characterized in that** it comprises the further following stages:
   e) Storage of at least one item of information associated with the image of the original marked deterministic design (5) in a database (15), wherein the stored information comprises at least one descriptor for the original marked deterministic design (8), at least one identification for the database record and one or more coordinates of the original deterministic design (1); wherein said computer-implemented method comprises the following stages intended to enhance the level of security against adulteration and counterfeiting of an object, allowing the validation of its authenticity, and tracking / tracing the object:
   f) Picture taken of at least one marked deterministic design image to be validated (6) in a marked object to be validated (11) with an optical reader (12) in a computing device (13);
   g) Calculation of at least one descriptor for the marked deterministic design to be validated (9), performed by the computing device (13), based on at least one marked deterministic design image to be validated (3);
   h) Validation of the authenticity of at least one marked deterministic design to be validated (3), embodied in a marked object to be validated (11), through comparing information calculated from at least one image of the marked deterministic design to be validated (6) with information corresponding to at least one image of the original marked deterministic design (5) stored in the database (15);
   i) Decision on the authenticity of at least one marked deterministic design to be validated (3) embodied in a marked object to be validated (11).

10. The computer-implemented method for preparing an original marked object (10) with a higher level of security against adulteration and counterfeiting according to the previous Claim, **characterized in that** for the storage stage of at least one item of information associated with the image of the original marked deterministic design (5) in a database (15), the information on the coordinates of the original deterministic design (1) to be established on the basis of one or more segments of the original deterministic design (1) and the coordinates of each segment comprises one or more of the selected coordinates of the group, consisting of time parameter coordinates, two-dimensional coordinates, or binary images.

11. The computer-implemented method for preparing an original marked object (10) with a higher level of security against adulteration and counterfeiting according to the previous Claim, **characterized in that** the coordinates of each segment of the original deterministic design (1) being time parameter coordinates.

12. The computer-implemented method for preparing an original marked object (10) with a higher level of security against adulteration and counterfeiting according to any one of the Claims 9 to 11, **characterized in that** additional information is stored in the database record (15) on the image of the original marked deterministic design (5), wherein the additional information comprises one or more items in the consisting of at least one image of the original marked deterministic design (5); information on the marking date, time and place; information on the traceability/trackability of the original marked object (10), including information on transactions and operations involving the said object; information on the manufacturer of the original marked object (10); and information on the categorization of the original marked object (10).

13. The computer-implemented method for preparing an original marked object (10) with a higher level of security against adulteration and counterfeiting according to any one of the Claims 9 to 12, **characterized in that** an ancillary laser mark (16) is placed on the original marked object (10), with the ancillary mark (16) comprising at least one frame of the original marked deterministic design (2) or at least one marking adjacent to the original marked deterministic design (2).

14. The computer-implemented method for preparing an original marked object (10) with a higher level of security against adulteration and counterfeiting according to the previous Claim, **characterized in that** the ancillary mark (16) serves as an indexing key for the original marked deterministic design image record (5) in the database (15).

15. The computer-implemented method for preparing an original marked object (10) with a higher level of security against adulteration and counterfeiting according to the previous Claim, **characterized in that** the ancillary mark (16) comprises one or more codes, selected from the group comprised of binary codes, such is long and short dashes, for example, one-dimensional matrix digital markers and two-dimensional matrix digital markers.

16. The computer-implemented method for preparing an original marked object (10) with a higher level of security against adulteration and counterfeiting according to any one of the Claims 9 to 15, **characterized in that** the original marked object (10) is selected from the group comprised of coins; medals; jewels; precious metal bars; metal sculptures; watches and clocks; pens; cutlery and metal artefacts, for example, electric device parts, electronic device parts, parts for the automotive industry and parts for the aviation industry.

17. The computer-implemented method for preparing an original marked object (10) with a higher level of security against adulteration and counterfeiting according to any one of the Claims 9 to 16, **characterized in that** the authenticity validation stage of at least one marked deterministic design to be validated (3), embodied in a marked object to be validated (11), through comparing information calculated from at least one image of the marked deterministic design to be validated (6) with information corresponding to at least one image of the original marked deterministic design (5), stored in the database (15), comprises the comparison of one or more of the geometric characteristics and/or one or more of the texture characteristics and/or one or more of the photometric characteristics and/or one or more of the radiometric characteristics and/or one or more of the three-dimensional depth characteristics and/or one or more of the random particle dispersal density characteristics and/or one or more of the chromatic characteristics in the picture of the marked deterministic design to be validated (6) with the respective characteristics in the image of the original marked deterministic design (5), wherein the said characteristics of the picture of the marked deterministic design to be validated (6) and the image of the original marked deterministic design (5) are defined respectively through one or more descriptors of the marked deterministic design to be validated (9) and through one or more descriptors for the original marked deterministic design (8) .

18. The computer-implemented method for preparing an original marked object (10) with a higher level of security against adulteration and counterfeiting according to any one of the Claims 9 to 17, **characterized in that** during authenticity validation stage of at least one marked deterministic design to be validated (3), embodied in a marked object to be validated (11), to be used in an analysis, through comparing the coordinates for the descriptors for the marked deterministic design to be validated (9) and the coordinates for the descriptors for the original marked deterministic design (8), optionally comprising weighting factors associated with one or more of the respective descriptors.

19. The computer-implemented method for preparing an original marked object (10) with a higher level of security against adulteration and counterfeiting according to any one of the Claims 9 to 18, **characterized in that** during authenticity validation stage of at least one marked deterministic design to be validated (3), embodied in a marked object to be validated (11), to be used in an analysis through one or more distance relations between the descriptors of the marked deterministic design to be validated (9) and the descriptors for the original marked deterministic design (8), optionally comprising weighting factors associated with one or more of the said distance relations.

20. The computer-implemented method for preparing an original marked object (10) with a higher level of security against adulteration and counterfeiting according to any one of the Claims 9 to 19, **characterized in that** during the authenticity validation stage of at least one marked deterministic design to be validated (3), embodied in a marked object to be validated (11), to be used in an analysis through a neural network configured through the following steps:

> i. Selection of a first sample set with a number of coordinates for the descriptors for the original marked deterministic design (8) for neural network training;
> ii. Selection of a second sample set with a number of coordinates for the descriptors for the marked deterministic design to be validated (9) for neural network training;
> iii. Establishment of normalized differences between the coordinates for the descriptors for the original marked deterministic design (8) and the coordinates for the descriptors for the marked deterministic design to be validated (9);
> iv. Establishment of acceptance value intervals for positive verification results between the image of the original marked deterministic design (5) and the picture of the marked deterministic design to be validated (6).

21. The computer-implemented method for preparing an original marked object (10) with a higher level of security against adulteration and counterfeiting according to any one of the Claims 9 to 20, **characterized in that** the authenticity validation stage of at least one marked deterministic design to be validated (3), embodied in a marked object to be validated (11), comprises the analysis of the texture characteristics of the image of the original marked deterministic design (5) through one or more of the following techniques: local binary pattern histogram (LBPH); histogram of oriented gradients (HOG); and Gray-Level Co-Occurrence Matrix (GLCM).

22. The computer-implemented method for preparing an original marked object (10) with a higher level of security against adulteration and counterfeiting according to any one of the Claims 9 to 21, **characterized in that** the descriptors for the original marked deterministic design (8) and descriptors of the marked deterministic design to be validated (9) are used, obtained through applying one or more of the following techniques: local binary pattern histogram (LBPH); histogram of oriented gradients (HOG); and Gray-Level Co-Occurrence Matrix (GLCM), where differences are calculated between these techniques, applied to one or more descriptors for the original marked deterministic design (8) and one or more descriptors of the marked deterministic design to be validated (9).

23. The computer-implemented method for preparing an original marked object (10) with a higher level of security against adulteration and counterfeiting according to any one of the Claims 9 to 22, **characterized in that**, during the authenticity validation stage of at least one marked deterministic design to be validated (3), embodied in a marked object to be validated (11), an optical reader (12) comprising a photographic camera is used.

24. The computer-implemented method for preparing an original marked object (10) with a higher level of security against adulteration and counterfeiting according to any one of the Claims 9 to 23, **characterized in that** the authenticity validation stage of at least one marked deterministic design to be validated (3), embodied in a marked object to be validated (11), comprises the following steps:

> i. At least one picture taken of the marked deterministic design to be validated (6) with an optical reader (12) in a computing device (13);
> ii. Calculation of the descriptors for the marked deterministic design to be validated (9) performed by the computing device (13);
> iii. Search conducted in at least one the database (15) through the descriptors for the original marked deterministic design (8) wherein the database (15) with information on the image of the original marked deterministic design (5) is accessed through the server (14);
> iv. Validation of an image of the marked deterministic design to be validated (6) through a comparison in the server (14) of the descriptors for the marked deterministic design to be validated (9) with the descriptors for the original marked deterministic design (8);
> v. Decision on the authenticity of a marked object to be validated (11) in the server (14);
> vi. Forwarding the decision on authenticity through the server (14) to the computing device (13).

25. The computer-implemented method for preparing an original marked object (10) with a higher level of security against adulteration and counterfeiting according to any one of the Claims 9 to 24, **characterized in that** during the authenticity validation stage of at least one marked deterministic design to be validated (3), embodied in a marked object to be validated (11), comprises the following steps:

i. At least one picture taken of the marked deterministic design to be validated (6) with an optical reader (12) in a computing device (13);

ii. Calculation of the descriptors for the marked deterministic design to be validated (9) performed by the computing device (13);

iii. Validation of an image of the marked deterministic design to be validated (6) in a marked object to be validated (11), through a comparison performed on the computing device (13) of the descriptors for the marked deterministic design to be validated (9) with the descriptors for the original marked deterministic design (8);

iv. Decision on the authenticity of a marked object to be validated (11) in the computing device (13).

26. A computing device (13), **characterized in that** it comprises means adapted for performing the stages of the computer-implemented method defined in any one of Claims 9 to 25, wherein the computing device (13) comprises an optical reader (12) to execute the stages c) and f) and a device for controlling a laser beam to execute the step b) of said computer-implemented method.

27. A computing device (13), **characterized in that** it comprises means adapted for performing the stages of the computer-implemented method defined in any one of Claims 1 to 8, wherein the computing device (13) comprises an optical reader (12) to execute the stage c) and a device for controlling a laser beam to execute the step b) of said computer-implemented method.

28. A computer program, **characterized in that** it comprises instructions which, when the program is executed by the computing device (13), as defined in Claim 26, cause the computing device (13) to perform the stages of the method defined in any one of Claims 9 to 25.

29. A computer program, **characterized in that** it comprises instructions which, when the program is executed by the computing device (13), as defined in Claim 27, cause the computing device (13) to perform the stages of the method defined in any one of Claims 1 to 8.

30. A computer-readable data carrier, **characterized by** having stored thereon the computer program, as defined in Claim 28.

31. A computer-readable data carrier, **characterized by** having stored thereon the computer program, as defined in Claim 29.

32. A device for preparing an original marked object (10) with a higher level of security against adulteration and counterfeiting, **characterized in that** it comprises means adapted to control the device emitting the laser beam and with the said device being configured to perform the method defined in any one of Claims 1 to 8.

**Patentansprüche**

1. Ein computerimplementiertes Verfahren zur Erhöhung des Sicherheitsniveaus eines Objekts (10) mittels eines deterministischen Entwurfs, ein Objekt mit erhöhtem Sicherheitsniveau und Verfahren, dass aus den folgenden Stufen besteht:

a) Erstellung eines ursprünglichen deterministischen Entwurfs (1) durch eine Rechenvorrichtung (13);

b) Lasermarkierung des in Schritt a) hergestellten ursprünglichen deterministischen Entwurfs (1) auf der Oberfläche eines Objekts, verkörpert als ursprünglich markierter deterministischer Entwurf (2) auf einem ursprünglich markierten Objekt (10), worin die Lasermarkierung des ursprünglichen deterministischen Entwurfs (1) zum Erhalt des ursprünglich markierten deterministischen Entwurfs (2), an einem Teil des ursprünglich markierten Objekts (10) durchgeführt wird, worin der genannte Teil aus einem oder mehreren Materialien besteht, die aus Kunststoffen, Metalllegierungen und Metallen, wie beispielsweise Gold, Silber, Platin und Palladium ausgewählt werden, und worin die genannte Lasermarkierung des ursprünglichen deterministischen Entwurfs (1) durch eine Vorrichtung zur Steuerung eines Laserstrahls ausgeführt wird;

c) Aufnahme mindestens eines Bildes des ursprünglich markierten deterministischen Entwurfs (5) mit einem optischen Lesegerät (12) in einer Rechenvorrichtung (13), um mindestens ein Bild des ursprünglich markierten deterministischen Entwurfs (5) zu erhalten;

d) Verbindung von mindestens einem Informationselement mit mindestens einem Bild des ursprünglich markierten deterministischen Entwurfs (5), um mindestens einen Deskriptor für den ursprünglich markierten deterministischen Entwurf (8) zu erhalten, **dadurch gekennzeichnet, dass** dieses die folgende weitere Stufe umfasst:

e) Speicherung von mindestens einem Informationselement, das mit dem Bild des ursprünglich markierten deterministischen Entwurfs (5) in Verbindung steht, in einer Datenbank (15), worin die gespeicherten Informationen mindestens einen Deskriptor für den ursprünglich markierten deterministischen Entwurf (8), mindestens eine Identifizierung für den Datenbankeintrag und eine oder mehrere Koordinaten des ursprünglichen deterministischen Entwurfs (1) enthalten.

2. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** für die Speicherstufe mindestens eines Informationselements in einer Datenbank (15), das mit dem Bild des ursprünglichen markierten deterministischen Entwurfs (5) verbunden ist, die Informationen über die Koordinaten des ursprünglichen deterministischen Entwurfs (1) auf der Grundlage eines oder mehrerer Segmente des ursprünglichen deterministischen Entwurfs (1) festzulegen sind, und die Koordinaten jedes Segments eine oder mehrere der gewählten Koordinaten der Gruppe umfassen, bestehend aus Zeitparameter-Koordinaten, zweidimensionalen Koordinaten oder binären Bildern.

3. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Koordinaten jedes Segments des ursprünglichen deterministischen Entwurfs (1) Zeitparameter-Koordinaten sind.

4. Das computerimplementierte Verfahren zur Erhöhung des Sicherheitsniveaus eines Objekts (10) mittels eines deterministischen Entwurfs gemäß einem der vorhergehenden Ansprüche, **dadurch gekennzeichnet, dass** zusätzliche Informationen im Datenbankeintrag (15) auf dem Bild des ursprünglichen markierten deterministischen Entwurfs (5) gespeichert werden, worin die zusätzlichen Informationen eine oder mehrere Elemente umfassen, bestehend aus mindestens einem Bild des ursprünglich markierten deterministischen Entwurfs (5), Angaben zum Datum, der Uhrzeit und dem Ort der Markierung, Informationen über die Rückverfolgbarkeit/Verfolgbarkeit des ursprünglich markierten Objekts (10), einschließlich von Informationen über Transaktionen und Vorgänge, die das genannte Objekt betreffen, Informationen über den Hersteller des ursprünglich markierten Objekts (10) und Informationen über die Kategorisierung des ursprünglich markierten Objekts (10) .

5. Das computerimplementierte Verfahren zur Erhöhung des Sicherheitsniveaus eines Objekts (10) mittels eines deterministischen Entwurfs gemäß einem der vorhergehenden Ansprüche, **dadurch gekennzeichnet, dass** eine zusätzliche Lasermarkierung (16) auf dem ursprünglich markierten Objekt (10) angebracht wird, wobei die Zusatzmarkierung (16), mindestens einen Rahmen des ursprünglich markierten deterministischen Entwurfs (2) oder mindestens eine Markierung neben dem ursprünglich markierten deterministischen Entwurf (2) umfasst.

6. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Zusatzmarkierung (16) als Indexierungsschlüssel für den Bilddatensatz des ursprünglich markierten deterministischen Entwurfs (5) in der Datenbank (15) dient.

7. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Zusatzmarkierung (16) aus einem oder mehreren Codes besteht, die aus der Gruppe bestehend aus Binärcodes ausgewählt werden, dieses sind lange und kurze Striche, wie z. B. eindimensionale digitale Matrixmarkierungen und zweidimensionale digitale Matrixmarkierungen.

8. Das computerimplementierte Verfahren zur Erhöhung des Sicherheitsniveaus eines Objekts (10) mittels eines deterministischen Entwurfs gemäß einem der vorhergehenden Ansprüche, **dadurch gekennzeichnet, dass** das ursprünglich markierte Objekt (10) aus der Gruppe ausgewählt wird, die aus Münzen, Medaillen, Juwelen, Edelmetallbarren, Metallskulpturen, Armbanduhren und Wanduhren, Schreibstiften, Besteck und Metallgegenständen, wie z. B. Teile für elektrische Geräte, Teile für elektronische Geräte, Teile für die Automobilindustrie und Teile für die Luftfahrtindustrie, besteht.

9. Das computerimplementierte Verfahren zur Erhöhung des Sicherheitsniveaus eines Objekts (10) mittels eines deterministischen Entwurfs gemäß einem der vorhergehenden Ansprüche, das aus den folgenden Stufen besteht:

a) Erstellung eines ursprünglichen deterministischen Entwurfs (1) durch eine Rechenvorrichtung (13);

b) Lasermarkierung des in Schritt a) hergestellten ursprünglichen deterministischen Entwurfs (1) auf der Oberfläche eines Objekts, verkörpert als ursprünglich markierter deterministischer Entwurf (2) auf einem originalen markierten Objekt (10), worin die Lasermarkierung des ursprünglichen deterministischen Entwurfs (1) zum Erhalt des ursprünglich markierten deterministischen Entwurfs (2), an einem Teil des ursprünglich markierten Objekts (10) durchgeführt wird, worin der genannte Teil aus einem oder mehreren Materialien besteht, die aus Kunststoffen, Metalllegierungen und Metallen, wie beispielsweise Gold, Silber, Platin und Palladium ausgewählt werden, worin die genannte Lasermarkierung des ursprünglichen deterministischen Entwurfs (1) durch eine Vorrichtung zur Steuerung eines Laserstrahls ausgeführt wird;

c) Aufnahme mindestens eines Bildes des ursprünglich markierten deterministischen Entwurfs (5) mit einem optischen Lesegerät (12) in einer Rechenvorrichtung (13), um mindestens ein Bild des ursprünglich markierten deterministischen Entwurfs (5) zu erhalten;

d) Verbindung von mindestens einem Informationselement mit mindestens einem Bild des ursprünglich markierten deterministischen Entwurfs (5), um mindestens einen Deskriptor für den ursprünglich markierten deterministischen Entwurf (8) zu erhalten, **dadurch gekennzeichnet, dass** dieses die folgenden weiteren Stufen umfasst:

e) Speicherung von mindestens einem Informationselement, das mit dem Bild des ursprünglich markierten deterministischen Entwurfs (5) in Verbindung steht, in einer Datenbank (15), worin die gespeicherten Informationen mindestens einen Deskriptor für den ursprünglich markierten deterministische Entwurf (8), mindestens eine Identifizierung für den Datenbankeintrag und eine oder mehrere Koordinaten des ursprünglichen deterministischen Entwurfs (1) enthalten, worin das genannte computerimplementierte Verfahren die folgenden Stufen umfasst, um das Sicherheitsniveau gegen Verfälschung und Nachahmung eines Objekts zu erhöhen, welches die Validierung seiner Authentizität und die Verfolgung/Rückverfolgung des Objekts ermöglicht:

f) Aufnahme mindestens eines Bildes des markierten deterministischen Entwurfs, das in einem markierten zu validierenden Objekt (11) mit einem optischen Lesegerät (12) in einer Rechenvorrichtung (13) validiert werden muss (6);

g) Berechnung von mindestens einem Deskriptor für den zu validierenden markierten deterministischen Entwurf (9), die von der Rechenvorrichtung (13) auf der Grundlage von mindestens einem zu validierenden markierten deterministischen Entwurfsbild durchgeführt wird (3);

h) Validierung der Echtheit von mindestens einem zu validierenden markierten deterministischen Entwurf (3), der in einem zu validierenden markierten Objekt (11) enthalten ist, durch Vergleich von Informationen, die aus mindestens einem Bild des zu validierenden markierten deterministischen Entwurfs (6) berechnet wurden, mit Informationen, die mindestens einem Bild des ursprünglich markierten deterministischen Entwurfs (5) entsprechen, der in der Datenbank (15) gespeichert ist;

i) Entscheidung über die Echtheit von mindestens einem zu validierenden, markierten deterministischen Entwurf (3), der in einem zu validierenden, markierten Objekt (11) enthalten ist.

10. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** für die Speicherstufe mindestens eines Informationselements in einer Datenbank (15), das mit dem Bild des ursprünglichen markierten deterministischen Entwurfs (5) verbunden ist, die Informationen über die Koordinaten des ursprünglichen deterministischen Entwurfs (1) auf der Grundlage eines oder mehrerer Segmente des ursprünglichen deterministischen Entwurfs (1) festzulegen sind, und die Koordinaten jedes Segments eine oder mehrere der gewählten Koordinaten der Gruppe umfassen, bestehend aus Zeitparameter-Koordinaten, zweidimensionalen Koordinaten oder binären Bildern.

11. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Koordinaten jedes Segments des ursprünglichen deterministischen Entwurfs (1) Zeitparameter-Koordinaten sind.

12. Das computerimplementierte Verfahren zur Erhöhung des Sicherheitsniveaus eines Objekts (10) mittels eines deterministischen Entwurfs gemäß einem der Ansprüche 9 bis 11, **dadurch gekennzeichnet, dass** zusätzliche Informationen im Datenbankeintrag (15) auf dem Bild des ursprünglich markierten deterministischen Entwurfs (5) gespeichert sind, worin die zusätzlichen Informationen ein oder mehrere Elemente umfassen, die aus mindestens einem Bild des ursprünglich markierten deterministischen Entwurfs (5) bestehen, sowie Angaben zum Datum, der Uhrzeit und dem Ort der Markierung, Angaben zur Rückverfolgbarkeit/Verfolgbarkeit des ursprünglich markierten Objekts (10), einschließlich Angaben zu Transaktionen und Vorgängen, die das betreffende Objekt betreffen, Angaben zum Hersteller des ursprünglich markierten Objekts (10) und Angaben zur Kategorisierung des ursprünglich markierten Objekts (10) enthalten.

13. Das computerimplementierte Verfahren zur Erhöhung des Sicherheitsniveaus eines Objekts (10) mittels eines deterministischen Entwurfs gemäß einem der Ansprüche 9 bis 12, **dadurch gekennzeichnet, dass** auf dem ursprünglich markierten Objekt (10) eine zusätzliche Lasermarkierung (16) angebracht ist, wobei die zusätzliche Markierung (16), mindestens einen Rahmen des ursprünglich markierten deterministischen Entwurfs (2) oder mindestens eine Markierung neben dem ursprünglich markierten deterministischen Entwurf (2) umfasst.

14. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Zusatzmarkierung (16) als Indexierungsschlüssel für den Bilddatensatz des ursprünglich markierten deterministischen Entwurfs (5) in der Datenbank (15) dient.

15. Das computerimplementierte Verfahren zur Erhöhung des Sicherheitsniveaus eines Objekts (10) mittels eines deterministischen Entwurfs gemäß dem vorhergehenden Anspruch, **dadurch gekennzeichnet, dass** die Zusatzmarkierung (16) aus einem oder mehreren Codes besteht, die aus der Gruppe bestehend aus Binärcodes ausgewählt werden, dieses sind lange und kurze Striche, wie z. B. eindimensionale digitale Matrixmarkierungen und zweidimensionale digitale Matrixmarkierungen.

16. Das computerimplementierte Verfahren zur Erhöhung des Sicherheitsniveaus eines Objekts (10) mittels eines deterministischen Entwurfs gemäß einem der Ansprüche 9 bis 15, **dadurch gekennzeichnet, dass** das ursprünglich markierte Objekt (10) aus der Gruppe ausgewählt wird, die aus Münzen, Medaillen, Juwelen, Edelmetallbarren, Metallskulpturen, Armbanduhren und Wanduhren, Schreibstiften, Besteck und Metallgegenständen, wie z. B. Teile für elektrische Geräte, Teile für elektronische Geräte, Teile für die Automobilindustrie und Teile für die Luftfahrtindustrie, besteht.

17. Das computerimplementierte Verfahren zur Erhöhung des Sicherheitsniveaus eines Objekts (10) mittels eines deterministischen Entwurfs gemäß einem der Ansprüche 9 bis 16, **dadurch gekennzeichnet, dass** die Echtheit-Validierungsphase von mindestens einem zu validierenden markierten deterministischen Entwurf (3), enthalten in einem zu validierenden markierten Objekt (11), durch den Vergleich von Informationen erfolgt, die aus mindestens einem Bild des zu validierenden markierten deterministischen Entwurfs (6) berechnet wurden, mit Informationen, die mindestens einem Bild des ursprünglich markierten deterministischen Entwurfs (5) entsprechen, das in der Datenbank (15) gespeichert ist. Dieses umfasst den Vergleich eines oder mehrerer der geometrischen Merkmale und/oder eines oder mehrerer der Textureigenschaften und/oder eines oder mehrerer der photometrischen Merkmale und/oder eines oder mehrerer der radiometrischen Merkmale und/oder eines oder mehrerer der dreidimensionalen Tiefeneigenschaften und/oder eines oder mehrerer der Eigenschaften der zufälligen Partikel-Dispersionsdichte und/oder eines oder mehrerer der chromatischen Eigenschaften im Bild des zu validierenden markierten deterministischen Entwurfs (6) mit den entsprechenden Merkmalen im Bild des ursprünglichen markierten deterministischen Entwurfs (5), worin die genannten Merkmale des Bildes des zu validierenden markierten deterministischen Entwurfs (6) und das Bild des ursprünglichen markierten deterministischen Entwurfs (5) jeweils durch einen oder mehrere Deskriptoren des zu validierenden markierten deterministischen Entwurfs (9) und durch einen oder mehrere Deskriptoren für den ursprünglich markierten deterministischen Entwurf (8) definiert werden.

18. Das computerimplementierte Verfahren zur Erhöhung des Sicherheitsniveaus eines Objekts (10) mittels eines deterministischen Entwurfs gemäß einem der Ansprüche 9 bis 17, **dadurch gekennzeichnet, dass** während der Echtheit-Validierungsphase von mindestens einem zu validierenden markierten deterministischen Entwurf (3), enthalten in einem zu validierenden markierten Objekt (11), der bei einer Analyse durch den Vergleich der Koordinaten der Deskriptoren für den zu validierenden markierten deterministischen Entwurf (9) und der Koordinaten für die Deskriptoren für den ursprünglich markierten deterministische Entwurf (8) verwendet werden soll, optional Gewichtungsfaktoren verwendet werden, die mit einem oder mehreren der jeweiligen Deskriptoren verknüpft sind.

19. Das computerimplementierte Verfahren zur Erhöhung des Sicherheitsniveaus eines Objekts (10) mittels eines deterministischen Entwurfs gemäß einem der Ansprüche 9 bis 18, **dadurch gekennzeichnet, dass** während der Echtheit-Validierungsphase von mindestens einem zu validierenden markierten deterministischen Entwurf (3), enthalten in einem zu validierenden markierten Objekt (11), der bei einer Analyse durch eine oder mehrere Abstands-

**EP 3 846 107 B1**

beziehungen zwischen den Deskriptoren des zu validierenden markierten deterministischen Entwurfs (9) und den Deskriptoren für den ursprünglich markierten deterministische Entwurf (8) verwendet werden soll, optional Gewichtungsfaktoren verwendet werden, die mit einer oder mehreren der genannten Abstandsbeziehungen verbunden sind.

20. Das computerimplementierte Verfahren zur Erhöhung des Sicherheitsniveaus eines Objekts (10) mittels eines deterministischen Entwurfs gemäß einem der Ansprüche 9 bis 19, **dadurch gekennzeichnet, dass** während der Echtheit-Validierungsphase von mindestens einem zu validierenden markierten deterministischen Entwurf (3), enthalten in einem zu validierenden markierten Objekt (11), der bei einer Analyse durch ein neuronales Netzwerk verwendet werden soll, das durch die folgenden Schritte konfiguriert wird:

   i. Auswahl eines ersten Probensatzes mit einer Anzahl von Koordinaten für die Deskriptoren des ursprünglich markierten deterministischen Entwurfs (8), zum Training des neuronalen Netzwerks;
   ii Auswahl eines zweiten Probensatzes mit einer Anzahl von Koordinaten für die Deskriptoren des zu validierenden markierten deterministischen Entwurfs (9), zum Training des neuronalen Netzwerks;
   iii Festlegung von normalisierten Differenzen zwischen den Koordinaten für die Deskriptoren des ursprünglich markierten deterministischen Entwurfs (8) und den Koordinaten für die Deskriptoren für den zu validierenden markierten deterministischen Entwurf (9) ;
   iv. Festlegung von Akzeptanzwert-Intervallen für positive Überprüfungsergebnisse zwischen dem Bild des ursprünglich markierten deterministischen Entwurfs (5) und dem Bild des zu validierenden markierten deterministischen Entwurfs (6).

21. Das computerimplementierte Verfahren zur Erhöhung des Sicherheitsniveaus eines Objekts (10) mittels eines deterministischen Entwurfs gemäß einem der Ansprüche 9 bis 20, **dadurch gekennzeichnet, dass** die Echtheit-Validierungsphase von mindestens einem zu validierenden markierten deterministischen Entwurf (3), enthalten in einem zu validierenden markierten Objekt (11), die Analyse der Textureigenschaften des Bildes des ursprünglichen markierten deterministischen Entwurfs (5) durch eine oder mehrere der folgenden Techniken umfasst: Lokales Binärmuster-Histogramm (LBPH), Histogramm der orientierten Gradienten (HOG) und Gray-Level Co-occurrence Matrix (GLCM).

22. Das computerimplementierte Verfahren zur Erhöhung des Sicherheitsniveaus eines Objekts (10) mittels eines deterministischen Entwurfs gemäß einem der Ansprüche 9 bis 21, **dadurch gekennzeichnet, dass** die Deskriptoren für den ursprünglich markierten deterministischen Entwurf (8) und die Deskriptoren des zu validierenden markierten deterministischen Entwurfs (9) verwendet werden, die durch Anwendung einer oder mehrerer der folgenden Techniken erhalten werden: Lokales Binärmuster-Histogramm (LBPH), Histogramm der orientierten Gradienten (HOG) und Gray-Level Co-occurrence Matrix (GLCM), wobei die Unterschiede zwischen diesen Techniken berechnet werden und auf einen oder mehrere Deskriptoren für den ursprünglich markierten deterministische Entwurf (8) und einen oder mehrere Deskriptoren des zu validierenden markierten deterministischen Entwurfs (9) angewendet werden.

23. Das computerimplementierte Verfahren zur Erhöhung des Sicherheitsniveaus eines Objekts (10) mittels eines deterministischen Entwurfs gemäß einem der Ansprüche 9 bis 22, **dadurch gekennzeichnet, dass** während der Echtheit-Validierungsphase von mindestens einem zu validierenden markierten deterministischen Entwurf (3), enthalten in einem zu validierenden markierten Objekt (11), ein optisches Lesegerät (12), bestehend aus einer fotografischen Kamera, verwendet wird.

24. Das computerimplementierte Verfahren zur Erhöhung des Sicherheitsniveaus eines Objekts (10) mittels eines deterministischen Entwurfs gemäß einem der Ansprüche 9 bis 23, **dadurch gekennzeichnet, dass** die Echtheit-Validierungsphase von mindestens einem zu validierenden markierten deterministischen Entwurf (3), enthalten in einem zu validierenden markierten Objekt (11), die folgenden Schritte umfasst:

   i. Aufnahme mindestens eines Bildes des zu validierenden markierten deterministischen Entwurfs (6) mit einem optischen Lesegerät (12) in einer Rechenvorrichtung (13);
   ii Berechnung der Deskriptoren für den zu validierenden markierten deterministische Entwurf (9), die von der Rechenvorrichtung (13) durchgeführt wird;
   iii In mindestens einer Datenbank (15) durchgeführte Suche durch die Deskriptoren für den ursprünglich markierten deterministischen Entwurf (8), worin die Datenbank (15) mit Informationen über das Bild des ursprünglich markierten deterministischen Entwurfs (5) über den Server (14) zugänglich ist;
   iv. Validierung eines Bildes des zu validierenden markierten deterministischen Entwurfs (6) durch einen Vergleich der Deskriptoren für den zu validierenden markierten deterministischen Entwurf (9) mit den Deskriptoren für den ursprünglich markierten deterministischen Entwurf (8) auf dem Server (14);

v. Entscheidung über die Echtheit eines zu validierenden markierten Objekts (11) auf dem Server (14);

vi. Weiterleitung der Entscheidung über die Echtheit durch den Server (14) an die Rechenvorrichtung (13) .

25. Das computerimplementierte Verfahren zur Erhöhung des Sicherheitsniveaus eines Objekts (10) mittels eines deterministischen Entwurfs gemäß einem der Ansprüche 9 bis 24, **dadurch gekennzeichnet, dass** während der Echtheit-Validierungsphase von mindestens einem zu validierenden markierten deterministischen Entwurf (3), enthalten in einem zu validierenden markierten Objekt (11), die folgenden Schritte durchgeführt werden:

i. Aufnahme mindestens eines Bildes des zu validierenden markierten deterministischen Entwurfs (6) mit einem optischen Lesegerät (12) in einer Rechenvorrichtung (13);

ii Berechnung der Deskriptoren für den zu validierenden markierten deterministische Entwurf (9), die von der Rechenvorrichtung (13) durchgeführt wird;

iii Validierung eines Bildes des zu validierenden markierten deterministischen Entwurfs (6) in einem zu validierenden markierten Objekt (11), durch einen Vergleich der Deskriptoren für den zu validierenden markierten deterministischen Entwurf (9) mit den Deskriptoren für den ursprünglich markierten deterministischen Entwurf (8), der auf der Rechenvorrichtung (13) durchgeführt wird;

iv. Entscheidung über die Echtheit eines zu validierenden markierten Objekts (11) in der Rechenvorrichtung (13).

26. Eine Rechenvorrichtung (13), **dadurch gekennzeichnet, dass** sie angepasste Mittel zur Durchführung der Stufen des computerimplementierten Verfahrens gemäß einem der Ansprüche 9 bis 25 umfasst, worin die Rechenvorrichtung (13) ein optisches Lesegerät (12) zur Ausführung der Stufen c) und f) enthält sowie eine Vorrichtung zur Steuerung eines Laserstrahls zur Ausführung des Schrittes b) des genannten computerimplementierten Verfahrens.

27. Eine Rechenvorrichtung (13), **dadurch gekennzeichnet, dass** sie angepasste Mittel zur Durchführung der Stufen des computerimplementierten Verfahrens gemäß einem der Ansprüche 1 bis 8 umfasst, worin die Rechenvorrichtung (13) ein optisches Lesegerät (12) enthält, um die Stufe c) auszuführen, sowie eine Vorrichtung zur Steuerung eines Laserstrahls zur Ausführung des Schrittes b) des genannten computerimplementierten Verfahrens.

28. Ein Computerprogramm, **dadurch gekennzeichnet, dass** es Anweisungen enthält, die bei Ausführung des Programms durch die Rechenvorrichtung (13), wie in Anspruch 26 definiert, bewirken, dass von der Rechenvorrichtung (13) die Stufen des in einem der Ansprüche 9 bis 25 definierten Verfahrens durchgeführt werden.

29. Ein Computerprogramm, **dadurch gekennzeichnet, dass** es Anweisungen enthält, die bei Ausführung des Programms durch die Rechenvorrichtung (13), wie in Anspruch 27 definiert, bewirken, dass von der Rechenvorrichtung (13) die Stufen des in einem der Ansprüche 1 bis 8 definierten Verfahrens durchgeführt werden.

30. Ein computerlesbarer Datenträger, **dadurch gekennzeichnet, dass** das Computerprogramm, wie in Anspruch 28 definiert, darauf gespeichert ist.

31. Ein computerlesbarer Datenträger, **dadurch gekennzeichnet, dass** das Computerprogramm, wie in Anspruch 29 definiert, darauf gespeichert ist.

32. Eine Vorrichtung zur Herstellung eines ursprünglich markierten Objekts (10) mit einem höheren Sicherheitsniveau gegen Verfälschung und Nachahmung, **dadurch gekennzeichnet, dass** sie Mittel enthält, um die Vorrichtung zur Ausstrahlung des Laserstrahls zu steuern, wobei die genannte Vorrichtung so konfiguriert ist, um das in einem der Ansprüche 1 bis 8 definierte Verfahren durchzuführen.

## Revendications

1. Procédé mis en oeuvre par ordinateur pour la préparation d'un objet marqué original (10) avec un niveau de sécurité plus élevé contre l'adultération et la contrefaçon comprenant les étapes suivantes :

a) La préparation d'une conception déterministe originale (1) par un dispositif informatique (13) ;

b) Le marquage laser de la conception déterministe originale (1), préparée à l'étape a), sur la surface d'un objet, conçu sous la forme d'une conception déterministe marquée originale (2) sur un objet marqué original (10), dans lequel le marquage laser de la conception déterministe originale (1), obtenant la conception déterministe marquée originale (2), est réalisée sur une partie de l'objet marqué original (10), dans lequel ladite partie est constituée d'un ou plusieurs matériaux sélectionnés parmi les plastiques, les alliages métalliques et les métaux, par exemple l'or, l'argent, le platine et le palladium, dans lequel ledit marquage laser de la conception déterministe original (1) est exécuté par un dispositif de commande d'un faisceau laser ;

c) Au moins une photo prise de la conception déterministe marquée originale (5) avec un lecteur optique (12) dans un dispositif informatique (13), obtenant au moins une image de la conception déterministe marquée originale (5) ;

d) L'association d'au moins un élément d' information avec au moins une image de la conception déterministe marquée originale (5), obtenant au moins un descripteur pour la conception déterministe marquée originale (8) ; **caractérisée en ce qu'**elle comprend en outre l'étape suivante :

e) Le stockage d'au moins un élément d'information associé avec l'image de la conception déterministe marquée originale (5) dans une base de données (15), dans lequel les informations stockées comprennent au moins un descripteur pour la conception déterministe marquée originale (8), au moins une identification pour l'enregistrement de base de données et une ou plusieurs coordonnées de la conception déterministe originale (1).

2. Procédé mis en oeuvre par ordinateur pour la préparation d'un objet marqué original (10) avec un niveau de sécurité plus élevé contre l'adultération et la contrefaçon selon la revendication précédente, **caractérisé en ce que** pour l'étape de stockage d'au moins un élément d'information associé avec l'image de la conception déterministe originale marquée (5) dans une base de données (15), les informations sur les coordonnées de la conception déterministe originale (1) à établir sur la base d'un ou plusieurs segments de la conception déterministe originale (1) et les coordonnées de chaque segment comprennent une ou plusieurs parmi les coordonnées sélectionnées du groupe, constituées de coordonnées de paramètres temporels, de coordonnées bidimensionnelles ou d'images binaires.

3. Procédé mis en oeuvre par ordinateur pour la préparation d'un objet marqué original (10) avec un niveau de sécurité plus élevé contre l'adultération et la contrefaçon selon la revendication précédente, **caractérisé en ce que** les coordonnées de chaque segment de la conception déterministe originale (1) sont des coordonnées de paramètres temporels.

4. Procédé mis en oeuvre par ordinateur pour la préparation d'un objet marqué original (10) avec un niveau de sécurité plus élevé contre l'adultération et la contrefaçon selon l'une quelconque des revendications précédentes, **caractérisé en ce que** des informations supplémentaires sont stockées dans l'enregistrement de base de données (15) sur l'image de la conception déterministe marquée originale (5), dans lequel les informations supplémentaires comprenant un ou plusieurs éléments consistant en au moins une image de la conception déterministe marquée originale (5) ; des informations sur la date, l'heure et le lieu du marquage ; des informations sur la traçabilité/le suivi de l'objet marqué original (10), y compris des informations sur les transactions et les opérations impliquant ledit objet ; des informations sur le fabricant de l'objet marqué original (10) ; et des informations sur la catégorisation de l'objet marqué original (10).

5. Procédé mis en oeuvre par ordinateur pour la préparation d'un objet marqué original (10) avec un niveau de sécurité plus élevé contre l'adultération et la contrefaçon selon l'une quelconque des revendications précédentes, **caractérisé en ce qu'**une marque laser auxiliaire (16) est placée sur l'objet marqué original (10), avec la marque auxiliaire (16) comprenant au moins un cadre de la conception déterministe marquée originale (2) ou au moins un marquage adjacent à la conception déterministe marquée originale (2).

6. Procédé mis en oeuvre par ordinateur pour la préparation d'un objet marqué original (10) avec un niveau de sécurité plus élevé contre l'adultération et la contrefaçon selon la revendication précédente, **caractérisé en ce que** la marque auxiliaire (16) sert en tant que clé d'indexation pour l'enregistrement d'image de la conception déterministe marquée originale (5) dans la base de données (15) .

7. Procédé mis en oeuvre par ordinateur pour la préparation d'un objet marqué original (10) avec un niveau de sécurité plus élevé contre l'adultération et la contrefaçon selon la revendication précédente, **caractérisé en ce que** la marque auxiliaire (16) comprend un ou plusieurs codes, sélectionnés parmi le groupe constitué de codes binaires, tels que des tirets longs et courts, par exemple, des marqueurs numériques matriciels unidimensionnels et des marqueurs numériques matriciels bidimensionnels.

8. Procédé mis en oeuvre par ordinateur pour la préparation d'un objet marqué original (10) avec un niveau de sécurité plus élevé contre l'adultération et la contrefaçon selon la revendication précédente, **caractérisé en ce que** l'objet marqué original (10) est sélectionné parmi le groupe constitué de pièces de monnaie ; de médailles ; de bijoux ; de lingots de métaux précieux ; de sculptures en métal ; de montres et d'horloges ; de stylos ; de couverts et d'objets en métal, par exemple : pièces d'appareils électriques, pièces d'appareils électroniques, pièces pour l'industrie automobile et pièces pour l'industrie aéronautique.

9. Procédé mis en oeuvre par ordinateur pour la préparation d'un objet marqué original (10) avec un niveau de sécurité plus élevé contre l'adultération et la contrefaçon selon l'une quelconque des revendications précédentes comprenant les étapes suivantes :

a) La préparation d'une conception déterministe originale (1) par un dispositif informatique (13) ;

b) Le marquage laser de la conception déterministe originale (1), préparée à l'étape a), sur la surface d'un objet, conçu sous la forme d'une conception déterministe marquée originale (2) sur un objet marqué original (10), dans lequel le marquage laser de la conception déterministe originale (1), obtenant la conception déterministe marquée originale (2), est réalisée sur une partie de l'objet marqué original (10), dans lequel ladite partie est constituée d'un ou plusieurs matériaux sélectionnés parmi les plastiques, les alliages métalliques et les métaux, par exemple l'or, l'argent, le platine et le palladium, dans lequel ledit marquage laser de la conception déterministe original (1) est exécuté par un dispositif de commande d'un faisceau laser ;

c) Au moins une photo prise de la conception déterministe marquée originale (5) avec un lecteur optique (12) dans un dispositif informatique (13), obtenant au moins une image de la conception déterministe marquée originale (5) ;

d) L'association d'au moins un élément d' information avec au moins une image de la conception déterministe marquée originale (5), obtenant au moins un descripteur pour la conception déterministe marquée originale (8) ; **caractérisée en ce qu'**elle comprend en outre les étapes suivantes :

e) Le stockage d'au moins un élément d'information associé avec l'image de la conception déterministe marquée originale (5) dans une base de données (15), dans lequel les informations stockées comprennent au moins un descripteur pour la conception déterministe marquée originale (8), au moins une identification pour l'enregistrement de base de données et une ou plusieurs coordonnées de la conception déterministe originale (1) ; dans lequel ledit procédé mis en oeuvre par ordinateur comprend les étapes suivantes destinées à améliorer le niveau de sécurité contre l'adultération et la contrefaçon d'un objet, permettant la validation de son authenticité, et le suivi/traçage de l'objet :

f) La photo prise d'au moins une image de conception déterministe marquée à valider (6) dans un objet marqué à valider (11) avec un lecteur optique (12) dans un dispositif informatique (13) ;

g) Le calcul d'au moins un descripteur pour la conception déterministe marquée à valider (9), effectué par le dispositif informatique (13), sur la base d'au moins une image de conception déterministe marquée à valider (3) ;

h) La validation de l'authenticité d'au moins une conception déterministe marquée à valider (3), conçue dans un objet marqué à valider (11), par le biais de la comparaison d'informations calculées à partir d'au moins une image de la conception déterministe marquée à valider (6) avec des informations correspondant à au moins une image de la conception déterministe marquée originale (5) stockée dans la base de données (15) ;

i) La décision sur l'authenticité d'au moins une conception déterministe marquée à valider (3) conçue dans un objet marqué à valider (11).

10. Procédé mis en oeuvre par ordinateur pour la préparation d'un objet marqué original (10) avec un niveau de sécurité plus élevé contre l'adultération et la contrefaçon selon la revendication précédente, **caractérisé en ce que** pour l'étape de stockage d'au moins un élément d'information associé avec l'image de la conception déterministe originale marquée (5) dans une base de données (15), les informations sur les coordonnées de la conception déterministe originale (1) à établir sur la base d'un ou plusieurs segments de la conception déterministe originale (1) et les coordonnées de chaque segment comprennent une ou plusieurs parmi les coordonnées sélectionnées du groupe, constituées de coordonnées de paramètres temporels, de coordonnées bidimensionnelles ou d'images binaires.

11. Procédé mis en oeuvre par ordinateur pour la préparation d'un objet marqué original (10) avec un niveau de sécurité plus élevé contre l'adultération et la contrefaçon selon la revendication précédente, **caractérisé en ce que** les coordonnées de chaque segment de la conception déterministe originale (1) sont des coordonnées de paramètres temporels.

12. Procédé mis en oeuvre par ordinateur pour la préparation d'un objet marqué original (10) avec un niveau de sécurité plus élevé contre l'adultération et la contrefaçon selon l'une quelconque des revendications 9 à 11, **caractérisé en ce que** des informations supplémentaires sont stockées dans l'enregistrement de base de données (15) sur l'image de la conception déterministe marquée originale (5), dans lequel les informations supplémentaires comprenant un ou plusieurs éléments consistant en au moins une image de la conception déterministe marquée originale (5) ; des informations sur la date, l'heure et le lieu du marquage ; des informations sur la traçabilité/le suivi de l'objet marqué original (10), y compris des informations sur les transactions et les opérations impliquant ledit objet ; des informations sur le fabricant de l'objet marqué original (10) ; et des informations sur la catégorisation de l'objet marqué original (10).

13. Procédé mis en oeuvre par ordinateur pour la préparation d'un objet marqué original (10) avec un niveau de sécurité plus élevé contre l'adultération et la contrefaçon selon l'une quelconque des revendications 9 à 12, **caractérisé en ce qu'**une marque laser auxiliaire (16) est placée sur l'objet marqué original (10), avec la marque auxiliaire (16) comprenant au moins un cadre de la conception déterministe marquée originale (2) ou au moins un marquage adjacent à la conception déterministe marquée originale (2).

14. Procédé mis en oeuvre par ordinateur pour la préparation d'un objet marqué original (10) avec un niveau de sécurité plus élevé contre l'adultération et la contrefaçon selon la revendication précédente, **caractérisé en ce que** la marque auxiliaire (16) sert en tant que clé d'indexation pour l'enregistrement d'image de la conception déterministe marquée originale (5) dans la base de données (15).

15. Procédé mis en oeuvre par ordinateur pour la préparation d'un objet marqué original (10) avec un niveau de sécurité plus élevé contre l'adultération et la contrefaçon selon la revendication précédente, **caractérisé en ce que** la marque auxiliaire (16) comprend un ou plusieurs codes, sélectionnés parmi le groupe constitué de codes binaires, tels que des tirets longs et courts, par exemple, des marqueurs numériques matriciels unidimensionnels et des marqueurs numériques matriciels bidimensionnels.

16. Procédé mis en oeuvre par ordinateur pour la préparation d'un objet marqué original (10) avec un niveau de sécurité plus élevé contre l'adultération et la contrefaçon selon l'une quelconque des revendications 9 à 15, **caractérisé en ce que** l'objet marqué original (10) est sélectionné parmi le groupe constitué de pièces de monnaie ; de médailles ; de bijoux ; de lingots de métaux précieux ; de sculptures en métal ; de montres et d'horloges ; de stylos ; de couverts et d'objets en métal, par exemple : pièces d'appareils électriques, pièces d'appareils électroniques, pièces pour l'industrie automobile et pièces pour l'industrie aéronautique.

17. Procédé mis en oeuvre par ordinateur pour la préparation d'un objet marqué original (10) avec un niveau de sécurité plus élevé contre l'adultération et la contrefaçon selon l'une quelconque des revendications 9 à 16, **caractérisé en ce que** l'étape de validation d'authenticité d'au moins une conception déterministe marquée à valider (3), conçue dans un objet marqué à valider (11), par le biais de la comparaison des informations calculées à partir d'au moins une image de la conception déterministe marquée à valider (6) avec des informations correspondant à au moins une image de la conception déterministe marquée originale (5), stockée dans la base de données (15), comprend la comparaison d'une ou plusieurs parmi les caractéristiques géométriques et/ou d'une ou plusieurs parmi les caractéristiques de texture et/ou d'une ou plusieurs parmi les caractéristiques photométriques et/ou d'une ou plusieurs parmi les caractéristiques radiométriques et/ou d'une ou plusieurs parmi les caractéristiques de profondeur tridimensionnelle et/ou d'une ou plusieurs parmi les caractéristiques de densité de dispersion aléatoire de particules et/ou d'une ou plusieurs parmi les caractéristiques chromatiques dans l'image de la conception déterministe marquée à valider (6) avec les caractéristiques respectives dans l'image de la conception déterministe marquée originale (5), dans lequel lesdites caractéristiques de l'image de la conception déterministe marquée à valider (6) et de l'image de la conception déterministe marquée originale (5) sont définies respectivement par le biais d'un ou plusieurs descripteurs de la conception déterministe marquée à valider (9) et par le biais d'un ou plusieurs descripteurs pour la conception déterministe marquée originale (8).

18. Procédé mis en oeuvre par ordinateur pour la préparation d'un objet marqué original (10) avec un niveau de sécurité plus élevé contre l'adultération et la contrefaçon selon l'une quelconque des revendications 9 à 17, **caractérisé en ce que** durant l'étape de validation d'authenticité d'au moins une conception déterministe marquée à valider (3), conçue dans un objet marqué à valider (11), à utiliser dans une analyse, par le biais de la comparaison des coordonnées pour les descripteurs pour la conception déterministe marquée à valider (9) et des coordonnées pour les descripteurs pour la conception déterministe marquée originale (8), il comprend éventuellement des facteurs de pondération associés avec un ou plusieurs parmi les descripteurs respectifs.

19. Procédé mis en oeuvre par ordinateur pour la préparation d'un objet marqué original (10) avec un niveau de sécurité plus élevé contre l'adultération et la contrefaçon selon l'une quelconque des revendications 9 à 18, **caractérisé en ce que** durant l'étape de validation d'authenticité d'au moins une conception déterministe marquée à valider (3), conçue dans un objet marqué à valider (11), à utiliser dans une analyse par le biais d'une ou plusieurs relations de distance entre les descripteurs de la conception déterministe marquée à valider (9) et les descripteurs pour la conception déterministe marquée originale (8), il comprend éventuellement des facteurs de pondération associés avec une ou plusieurs parmi lesdites relations de distance.

20. Procédé mis en oeuvre par ordinateur pour la préparation d'un objet marqué original (10) avec un niveau de sécurité plus élevé contre l'adultération et la contrefaçon selon l'une quelconque des revendications 9 à 19, **caractérisé en ce que** durant l'étape de validation d'authenticité d'au moins une conception déterministe marquée à valider (3), conçue dans un objet marqué à valider (11), à utiliser dans une analyse par le biais d'un réseau neuronal configuré par le biais des étapes suivantes :

    i. La sélection d'un premier ensemble d'échantillons avec un certain nombre de coordonnées pour les descripteurs pour la conception déterministe marquée originale (8) pour la formation de réseaux neuronaux ;
    ii. La sélection d'un deuxième ensemble d'échantillons avec un certain nombre de coordonnées pour les descripteurs pour la conception déterministe marquée à valider (9) pour la formation des réseaux neuronaux ;
    iii. L'établissement de différences normalisées entre les coordonnées pour les descripteurs de la conception déterministe marquée originale (8) et les coordonnées pour les descripteurs de la conception déterministe marquée à valider (9) ;
    iv. L'établissement d'intervalles de valeur d'acceptation pour les résultats de vérification positifs entre l'image de la conception déterministe marquée originale (5) et l'image de la conception déterministe marquée à valider (6).

21. Procédé mis en oeuvre par ordinateur pour la préparation d'un objet marqué original (10) avec un niveau de sécurité plus élevé contre l'adultération et la contrefaçon selon l'une quelconque des revendications 9 à 20, **caractérisé en ce que** l'étape de validation d'authenticité d'au moins une conception déterministe marquée à valider (3), conçue dans un objet marqué à valider (11), comprend l'analyse des caractéristiques de texture de l'image de la conception déterministe marquée originale (5) par le biais d'une ou plusieurs parmi les techniques suivantes : histogramme des motifs binaires locaux (LBPH) ; histogramme de gradients orientés (HOG) ; et matrice de co-occurrence de niveaux de gris (GLCM).

22. Procédé mis en oeuvre par ordinateur pour la préparation d'un objet marqué original (10) avec un niveau de sécurité plus élevé contre l'adultération et la contrefaçon selon l'une quelconque des revendications 9 à 21, **caractérisé en ce que** les descripteurs pour la conception déterministe marquée originale (8), et les descripteurs pour la conception déterministe marquée à valider (9) sont utilisés, obtenus par le biais de l'application d'une ou plusieurs parmi les techniques suivantes : histogramme des motifs binaires locaux (LBPH) ; histogramme de gradients orientés (HOG) ; et matrice de co-occurrence de niveaux de gris (GLCM), où les différences sont calculées entre ces techniques, appliquées à un ou plusieurs descripteurs pour la conception déterministe marquée originale (8) et à un ou plusieurs descripteurs de la conception déterministe marquée à valider (9).

23. Procédé mis en oeuvre par ordinateur pour la préparation d'un objet marqué original (10) avec un niveau de sécurité plus élevé contre l'adultération et la contrefaçon selon l'une quelconque des revendications 9 à 22, **caractérisé en ce que**, durant l'étape de validation d'authenticité d'au moins une conception déterministe marquée à valider (3), conçue dans un objet marqué à valider (11), un lecteur optique (12) comprenant un appareil photographique est utilisé.

24. Procédé mis en oeuvre par ordinateur pour la préparation d'un objet marqué original (10) avec un niveau de sécurité plus élevé contre l'adultération et la contrefaçon selon l'une quelconque des revendications 9 à 23, **caractérisé en ce que**, l'étape de validation d'authenticité d'au moins une conception déterministe marquée à valider (3), conçue dans un objet marqué à valider (11), comprend les étapes suivantes :

    i. Au moins une photo prise de la conception déterministe marquée à valider (6) avec un lecteur optique (12) dans un dispositif informatique (13) ;
    ii. Le calcul des descripteurs pour la conception déterministe marquée à valider (9) effectué par le dispositif informatique (13) ;
    iii. Une recherche effectuée dans au moins une base de données (15) par le biais des descripteurs pour la conception déterministe marquée originale (8), dans laquelle la base de données (15) avec des informations sur l'image de la conception déterministe marquée originale (5) est accédée par le biais du serveur (14) ;
    iv. La validation d'une image de la conception déterministe marquée à valider (6) par le biais d'une comparaison dans le serveur (14) des descripteurs pour la conception déterministe marquée à valider (9) avec les descripteurs pour la conception déterministe marquée originale (8) ;
v. La décision sur l'authenticité d'un objet marqué à valider (11) dans le serveur (14) ;
vi. La transmission de la décision sur l'authenticité par le biais du serveur (14) au dispositif informatique (13).

25. Procédé mis en oeuvre par ordinateur pour la préparation d'un objet marqué original (10) avec un niveau de sécurité plus élevé contre l'adultération et la contrefaçon selon l'une quelconque des revendications 9 à 24, **caractérisé en ce que** durant l'étape de validation d'authenticité d'au moins une conception déterministe marquée à valider (3), conçue dans un objet marqué à valider (11), il comprend les étapes suivantes :

i. Au moins une photo prise de la conception déterministe marquée à valider (6) avec un lecteur optique (12) dans un dispositif informatique (13) ;
ii. Le calcul des descripteurs pour la conception déterministe marquée à valider (9) effectué par le dispositif informatique (13) ;
iii. La validation d'une image de la conception déterministe marquée à valider (6) dans un objet marqué à valider (11), par le biais d'une comparaison effectuée dans le serveur (13) des descripteurs pour la conception déterministe marquée à valider (9) avec les descripteurs pour la conception déterministe marquée originale (8) ;
iv. La décision sur l'authenticité d'un objet marqué à valider (11) dans le dispositif informatique (13).

26. Dispositif informatique (13), **caractérisé en ce qu'**il comprend des moyens adaptés pour la réalisation des étapes du procédé mis en oeuvre par ordinateur défini dans l'une quelconque des revendications 9 à 25, dans lequel le dispositif informatique (13) comprend un lecteur optique (12). pour exécuter les étapes c) et f) et un dispositif de commande d'un faisceau laser pour exécuter l'étape b) dudit procédé mis en oeuvre par ordinateur.

27. Dispositif informatique (13), **caractérisé en ce qu'**il comprend des moyens adaptés pour la réalisation des étapes du procédé mis en oeuvre par ordinateur défini dans l'une quelconque des revendications 1 à 8, dans lequel le dispositif informatique (13) comprend un lecteur optique (12). pour exécuter l'étape c) et un dispositif de commande d'un faisceau laser pour exécuter l'étape b) dudit procédé mis en oeuvre par ordinateur.

28. Programme informatique, **caractérisé en ce qu'**il comprend des instructions qui, lorsque le programme est exécuté par le dispositif informatique (13), tel que défini dans la revendication 26, amènent le dispositif informatique (13) à exécuter les étapes du procédé défini selon l'une quelconque des revendications 9 à 25.

29. Programme informatique, **caractérisé en ce qu'**il comprend des instructions qui, lorsque le programme est exécuté par le dispositif informatique (13), tel que défini dans la revendication 27, amènent le dispositif informatique (13) à effectuer les étapes du procédé défini selon l'une quelconque des revendications 1 à 8.

30. Support de données lisible par ordinateur, **caractérisé en ce qu'**il y contient le programme informatique, tel que défini dans la revendication 28.

31. Support de données lisible par ordinateur, **caractérisé en ce qu'**il y contient le programme informatique, tel que défini dans la revendication 29.

32. Dispositif pour la préparation d'un objet marqué original (10) avec un niveau de sécurité plus élevé contre l'adultération et la contrefaçon, **caractérisé en ce qu'**il comprend des moyens adaptés pour commander le dispositif d'émission du faisceau laser et avec ledit dispositif étant configuré pour effectuer le procédé défini selon l'une quelconque des revendications 1 à 8.

Figure 1

Figure 2

Figure 3

Figure 4

Figure 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9603714 A1, Jeszenszky, Gyula and Dombi, János
- US 2017355215 A1
- WO 9725177 A1
- US 6238847 B1, Ayres
- US 2008223834 A1, Michael John Griffiths and Yancy Edward Fox

### Non-patent literature cited in the description

- **ARPPE-TABBARA et al.** Versatile and Validated Optical Authentication System Based on Physical Unclonable Functions. *ACS Applied Materials & Interfaces,* 2019, vol. 11 (6), 6475-6482
- **CRUZ L. ; PATRÃO B ; GONÇALVES, N.** Graphic Code: A New Machine-Readable Approach. *IEEE International Conference on Artificial Intelligence and Virtual Reality (AIVR),* 10 December 2018
- **CRUZ L ; PATRÃO B ; GONÇALVES, N.** Halftone Pattern: A New Steganographic Approach. *Eurographics,* 2018